# EUROPEAN PATENT SPECIFICATION

(11) **EP 4 538 979 B1**
(45) Date of publication and mention of the grant of the patent: **24.06.2026**
(21) Application number: 23881550.0
(22) Date of filing: 22.09.2023
(51) Int. Cl.: G06T 3/4007, G06T 3/18

(54) **METHOD AND APPARATUS FOR IMAGE PROCESSING, AND STORAGE MEDIUM**
VERFAHREN UND VORRICHTUNG ZUR BILDVERARBEITUNG UND SPEICHERMEDIUM
PROCÉDÉ ET APPAREIL DE TRAITEMENT D'IMAGE, ET SUPPORT DE STOCKAGE

(30) Priority: 26.10.2022 CN 202211319597
(43) Date of publication of application: 16.04.2025
(73) Proprietor: Honor Device Co., Ltd., Shenzhen, Guangdong 518040 (CN)
(72) Inventor: LIU, Zhichao, Shenzhen, Guangdong 518040 (CN)
(74) Representative: Isarpatent
(86) International application number: PCT/CN2023/120794
(87) International publication number: WO 2024/087971

(56) References cited:
- WO-A1-2022/108472
- WO-A1-2022/108472
- CN-A- 109 672 886
- US-A1- 2012 099 652
- US-A1- 2020 021 824
- US-A1- 2022 295 095
- DONG JIONG ET AL: "Video Frame Interpolation: A Comprehensive Survey", ACM TRANSACTIONS ON MULTIMEDIA COMPUTING COMMUNICATIONS ANDAPPLICATIONS, ASSOCIATION FOR COMPUTING MACHINERY, US, 31 January 2023 (2023-01-31), XP059180451, ISSN: 1551-6857, DOI: 10.1145/3556544

## Description

This application claims priority to Chinese Patent Application No. 202211319597.7, filed with the China National Intellectual Property Administration on October 26, 2022 and entitled "METHOD AND APPARATUS FOR IMAGE PROCESSING, AND STORAGE MEDIUM.

### TECHNICAL FIELD

This application relates to the field of information technologies, and particularly relates to a method and an apparatus for image processing, and a storage medium.

### BACKGROUND

As image processing technologies develop rapidly, a screen refresh rate and a rendering resolution of video playing are gradually increased in some scenarios highly demanding quality of video pictures, such as game interfaces, virtual reality (virtual reality, VR) interfaces and augmented reality (Augmented Reality, AR) interfaces. For example, the screen refresh rate is increased from 60 Hz to 120 Hz and even higher, and the rendering resolution is improved from 720 p to 2 k and even higher. In consequence, electronic devices are confronted with tougher challenges in performance and power consumption. To reduce the power consumption, a frame prediction technology has been applied to process video data.

The frame prediction technology is a type of technology of performing prediction and inserting a predicted frame according to data such as a motion vector of a real frame. By inserting the predicted frame, a frame rate of a display image can be improved, a sense of lagging can be reduced, and power consumption of video rendering can be lowered. During generation of the predicted frame, since two adjacent real frames are strikingly similar, a motion vector of a pixel between the two real frames can be obtained by computing a level of similarity between the real frames. A position of the pixel in the predicted frame is predicted according to the motion vector, and then the pixel is placed at the corresponding position. Image data for filling a pixel region of which a matching relationship cannot be determined between two real frames is required to be predicted through a pixel filling algorithm. Video frames are different in image information distribution characteristics due to different scenarios, environments and picture styles. Thus, a fixed predicted frame generation solution possibly leads to poor image quality of the predicted frame.

Various frame prediction algorithms are disclosed in the prior art publications WO 2022/108472 A1 and US 2012/099652 A1.

The survey paper by Dong Jiong et al.: "Video Frame Interpolation: A Comprehensive Survey", ACM TRANSACTIONS ON MULTIMEDIA COMPUTING COMMUNICATIONS AND APPLICATIONS, also discloses several prior art methods of video frame interpolation.

To solve the above problems, the industry has been focusing on developing a method capable of improving picture quality and accuracy of a predicted frame based on saving power consumption and computational power.

### SUMMARY

Embodiments of this application provide a method and an apparatus for image processing, and a storage medium, which can improve image quality of a generated predicted frame.

In a first aspect, an embodiment of this application provides a method for image processing. The method includes: carrying out at least one round of warping processing on a color image of a first real frame according to motion vector information between the first real frame and a second real frame, to obtain a first target color image of a predicted frame. The first target color image of the predicted frame includes a blank region caused by the at least one round of warping processing. Each of the at least one round of warping processing includes: generating a full-screen grid layer covering the first real frame, where the full-screen grid layer includes a plurality of grids, and each grid includes a plurality of pixels; carrying out warping processing on at least some grids in the full-screen grid layer according to the motion vector information; outputting a color image corresponding to each round of warping processing according to a warped full-screen grid layer and the color image of the first real frame; and filling the blank region in the first target color image of the predicted frame, to obtain a second target color image of the predicted frame, where the second target color image is a display image of the predicted frame.

In this way, a full-screen grid layer covering a first real frame is generated when a predicted frame is generated, and a color image including a blank region is obtained through one or more rounds of warping processing on the full-screen grid layer according to a motion vector between two real frames. By obtaining the color image of the predicted frame through a warping method for a full-screen grid layer, instead of pixel shifting in units of pixels, computational resources can be reduced and an accuracy degree of the predicted frame can be improved.

In combination with the first aspect, in a possible implementation, the at least one round of warping processing includes a plurality of rounds of warping processing. The plurality of rounds of warping processing correspond to a plurality of warping types respectively. The plurality of warping types include at least one of: a warping operation performed on a static object; a warping operation performed on a dynamic object; a warping operation performed on a static object in a long shot; a warping operation performed on a dynamic object in a close shot; a warping operation performed on a dynamic object in a long shot; and a warping operation performed on a static object in a close shot.

In this way, in each round of warping processing, warping is carried out on different types of objects in the image by distinguishing whether an object to undergo each round of processing is a static object, a dynamic object, a long-shot image or a close-shot image such that an accuracy degree of a color image finally obtained can be improved, and further image quality can be improved.

In combination with the first aspect, in a possible implementation, the at least one round of warping processing includes a plurality of rounds of warping processing. Resolutions of full-screen grid layers corresponding to at least two of the plurality of rounds of warping processing are different.

In this way, a resolution of a full-screen grid layer can be flexibly selected according to an object to undergo each round of warping processing, such that computational power and power consumption are saved, and computational efficiency of the predicted frame is improved.

In combination with the first aspect, in a possible implementation, the method further includes: setting, in a case that an object to undergo an i^{th} round of processing of the at least one round of warping processing is a static object in a long shot, a resolution of a full-screen grid layer used in the i^{th} round of processing as a first resolution, where i is an integer greater than or equal to 1; and setting, in a case that the object to undergo the i^{th} round of processing of the at least one round of warping processing is a static object or a dynamic object in a close shot, a resolution of the full-screen grid layer used in the i^{th} round of processing as a second resolution, where the first resolution is lower than the second resolution.

In this way, since an amount of change of a static object in a long shot between two video frames is small, a warping operation can be carried out by using a full-screen grid layer having a lower resolution. Since a dynamic object is in a state of motion, and a close-shot image is closer to a camera and more affected by a prediction error of a motion vector, a more accurate predicted image can be obtained by using a higher resolution for grid warping. An object to undergo each round of warping operation is refined, and a resolution of a full-screen grid layer is flexibly selected according to an object to undergo each round of warping processing, such that computational power and power consumption are saved, and computational efficiency of the predicted frame is improved.

In combination with the first aspect, in a possible implementation, the at least one round of warping processing includes a plurality of rounds of warping processing. A first round of the plurality of rounds of warping processing includes: generating a first full-screen grid layer covering the first real frame; shifting grid vertices in the first full-screen grid layer according to motion vector information of a static object, to obtain a warped first full-screen grid layer; and outputting pixels of the static object in the color image of the first real frame to a blank image according to the warped first full-screen grid layer, to obtain the first color image.

In combination with the first aspect, in a possible implementation, the outputting pixels of the static object in the color image of the first real frame to a blank image, to obtain the first color image include: determining whether a first pixel belongs to the static object or the dynamic object according to a full-screen semantic image of the first real frame, where the first pixel is any pixel in the color image of the first real frame; outputting, in a case that the first pixel belongs to the static object, the first pixel to a first position in the blank image, to obtain the first color image, where the first position is a corresponding position of the first pixel in the warped first full-screen grid layer; and skipping outputting the first pixel to the blank image in a case that the first pixel belongs to the dynamic object.

In combination with the first aspect, in a possible implementation, a second round of the plurality of rounds of warping processing includes: generating a second full-screen grid layer covering the first real frame; shifting grid vertices in the second full-screen grid layer according to motion vector information of a dynamic object, to obtain a warped second full-screen grid layer; and outputting pixels of the dynamic object in the color image of the first real frame to the first color image according to the warped second full-screen grid layer, to obtain the first target color image.

In combination with the first aspect, in a possible implementation, the outputting pixels of the dynamic object in the color image of the first real frame to the first color image according to the warped second full-screen grid layer, to obtain the first target color image include: determining whether a second pixel belongs to a static object or a dynamic object according to a full-screen semantic image of the first real frame, where the second pixel is any pixel in the color image of the first real frame; outputting, in a case that the second pixel belongs to the dynamic object, the second pixel to a second position in the first color image, to obtain the first target color image, where the second position is a corresponding position of the second pixel in the warped second full-screen grid layer; and skipping outputting the second pixel to the first color image in a case that the second pixel belongs to the static object.

In combination with the first aspect, in a possible implementation, the at least one round of warping processing includes a plurality of rounds of warping processing. A first round of the plurality of rounds of warping processing includes: generating a first full-screen grid layer covering the first real frame; shifting grid vertices in the first full-screen grid layer according to motion vector information of a static object in a long shot, to obtain a warped first full-screen grid layer; and outputting pixels of the static object in the long shot in the color image of the first real frame to a blank image according to the warped first full-screen grid layer, to obtain the first color image.

In combination with the first aspect, in a possible implementation, the outputting pixels of the static object in the long shot in the color image of the first real frame to a blank image according to the warped first full-screen grid layer, to obtain the first color image include: determining whether a first pixel belongs to the static object or the dynamic object according to a full-screen semantic image of the first real frame, where the first pixel is any pixel in the color image of the first real frame; determining whether a depth of the first pixel is greater than a preset depth threshold according to a scenario depth map of the first real frame in a case that the first pixel belongs to the static object; outputting the first pixel to a first position in the blank image, to obtain the first color image in a case that the depth of the first pixel is greater than a preset depth threshold D, where the first position is a corresponding position of the first pixel in the warped first full-screen grid layer; skipping outputting the first pixel to the blank image in a case that the depth of the first pixel is less than the preset depth threshold D; and skipping outputting the first pixel to the blank image in a case that the first pixel belongs to the dynamic object.

In combination with the first aspect, in a possible implementation, a second round of the plurality of rounds of warping processing includes: generating a second full-screen grid layer covering the first real frame; shifting grid vertices in the second full-screen grid layer according to motion vector information of the static object in the close shot, to obtain a warped second full-screen grid layer; and outputting pixels of the static object in the close shot in the color image of the first real frame to the first color image according to the warped second full-screen grid layer, to obtain a second color image.

In combination with the first aspect, in a possible implementation, a third round of the plurality of rounds of warping processing includes: generating a third full-screen grid layer covering the first real frame; shifting grid vertices in the third full-screen grid layer according to motion vector information of the dynamic object in the long shot, to obtain a warped third full-screen grid layer; and outputting pixels of the dynamic object in the color image of the first real frame to a second color image, to obtain a third color image according to the warped third full-screen grid layer.

In combination with the first aspect, in a possible implementation, a fourth round of the plurality of rounds of warping processing includes: generating a fourth full-screen grid layer covering the first real frame; shifting grid vertices in the fourth full-screen grid layer according to motion vector information of the dynamic object in the close shot, to obtain a warped fourth full-screen grid layer; and outputting pixels of the dynamic object in the color image of the first real frame to the third color image according to the warped fourth full-screen grid layer, to obtain the first target color image.

In combination with the first aspect, in a possible implementation, the filling the blank region in the first target color image of the predicted frame, to obtain a second target color image of the predicted frame include: determining a threshold range to which a camera angle between the first real frame and the second real frame belongs; selecting a target pixel filling algorithm from at least two candidate pixel filling algorithms according to the threshold range to which the camera angle belongs; and filling the blank region in the first target color image according to the target pixel filling algorithm, to obtain the second target color image.

In this way, when a blank region in a first target color image is filled, a target pixel filling algorithm may be selected from a plurality of candidate pixel filling algorithms according to a threshold range to which a camera angle belongs to fill the blank region. Since different pixel filling algorithms are suitable for different scenarios, by flexibly selecting a pixel filling algorithm for filling a blank region according to a threshold of a camera angle, a prediction accuracy degree and image quality of a display image of a predicted frame can be improved.

In combination with the first aspect, in a possible implementation, the selecting a target pixel filling algorithm from at least two candidate pixel filling algorithms according to the threshold range to which the camera angle belongs includes: selecting a first pixel filling algorithm as the target pixel filling algorithm in a case that the camera angle is less than a first angle threshold, where the first pixel filling algorithm implements pixel filling by sampling pixels of a static object around a pixel to undergo filling; and selecting a second pixel filling algorithm as the target pixel filling algorithm in a case that the camera angle is greater than the first angle threshold, where the second pixel filling algorithm implements pixel filling by sampling pixels of a static object and a dynamic object around a pixel to undergo filling.

In a second aspect, an embodiment of this application provides a method for image processing. The method includes: obtaining motion vector information between a first real frame and a second real frame; and carrying out warping processing on a color image of the first real frame, to obtain a first target color image of a predicted frame according to the motion vector information. The warping processing includes: generating a full-screen grid layer covering the first real frame, where the full-screen grid layer includes a plurality of grids, and each grid includes a plurality of pixels; carrying out warping processing on grids in the full-screen grid layer according to the motion vector information; to obtain a warped color image according to a warped full-screen grid layer and the color image of the first real frame.

In combination with the second aspect, in a possible implementation, the warping processing includes a plurality of rounds of warping processing. The plurality of rounds of warping processing correspond to a plurality of warping types respectively. The plurality of warping types include at least one of: a warping operation performed on a static object; a warping operation performed on a dynamic object; a warping operation performed on a static object in a long shot; a warping operation performed on a dynamic object in a close shot; a warping operation performed on a dynamic object in a long shot; and a warping operation performed on a static object in a close shot.

In combination with the second aspect, in a possible implementation, the warping processing includes a plurality of rounds of warping processing. Resolutions of full-screen grid layers corresponding to at least two of the plurality of rounds of warping processing are different.

In combination with the second aspect, in a possible implementation, the method further includes: setting, in a case that an object to undergo an i^{th} round of processing of the plurality of rounds of warping processing is a static object in a long shot, a resolution of a full-screen grid layer used in the i^{th} round of processing as a first resolution, where i is an integer greater than or equal to 1; and setting, in a case that the object to undergo the i^{th} round of processing of the at least one round of warping processing is a static object or a dynamic object in a close shot, a resolution of the full-screen grid layer used in the i^{th} round of processing as a second resolution, where the first resolution is lower than the second resolution.

In combination with the second aspect, in a possible implementation, the method further includes: filling the blank region in the first target color image of the predicted frame, to obtain a second target color image of the predicted frame, where the second target color image is a display image of the predicted frame.

In a third aspect, an embodiment of this application provides an apparatus for image processing. The apparatus includes: a processor and a memory. The memory stores computer-executable instructions. The processor executes the computer-executable instructions stored in the memory to cause a terminal device to perform the method as the first aspect or the second aspect.

In a fourth aspect, an embodiment of this application provides a computer-readable storage medium. The computer-readable storage medium stores a computer program. The computer program implements the method as the first aspect or the second aspect when executed by a processor.

In a fifth aspect, an embodiment of this application provides a computer program product. The computer program product includes a computer program. The computer program causes a computer to perform the method as the first aspect or the second aspect when run.

In a sixth aspect, an embodiment of this application provides a chip. The chip includes a processor. The processor is configured to call a computer program in a memory to perform the method as the first aspect or the second aspect.

It should be understood that the second aspect to the sixth aspect of this application correspond to the technical solution of the first aspect of this application, and beneficial effects obtained by each aspect and the corresponding feasible implementation are similar and will not be repeated.

### BRIEF DESCRIPTION OF DRAWINGS

FIG. 1 is a schematic diagram of a principle of generating a predicted frame according to an embodiment of this application;
FIG. 2 is a block diagram of a software architecture of an apparatus 100 for image processing according to an embodiment of this application;
FIG. 3 is a schematic flow diagram of a method for image processing according to an embodiment of this application;
FIG. 4 is a schematic diagram of carrying out warping processing on a color image of a first real frame according to an embodiment of this application;
FIG. 5 is a schematic diagram of carrying out warping processing on a color image of a first real frame according to another embodiment of this application;
FIG. 6 is a schematic flow diagram of a first pixel filling algorithm according to an embodiment of this application;
FIG. 7 is a schematic flow diagram of a second pixel filling algorithm according to an embodiment of this application;
FIG. 8 is a schematic flow diagram of a rendering process according to an embodiment of this application;
FIG. 9 is a schematic diagram of a hardware structure of an apparatus 900 for image processing according to an embodiment of this application;
FIG. 10 is a schematic structural diagram of an apparatus 1000 for image processing according to an embodiment of this application; and
FIG. 11 is a schematic diagram of a hardware structure of an apparatus 1100 for image processing according to an embodiment of this application.

### DESCRIPTION OF EMBODIMENTS

To clearly describe the technical solutions of embodiments of this application, in the embodiments of this application, the words such as "example" and "for example" are used to represent examples, illustrations or descriptions. Any embodiment or design solution described as an "example" or "for example" in this application should not be explained as being more preferred or having more advantages than another embodiment or design solution. In particular, the words such as "example" and "for example" as used to present the related concepts in a specific manner.

In embodiments of this application, "at least one" refers to one or more, and "a plurality" refers to two or more. Term "and/or" describing an association relationship between associated objects indicates that there can be three relationships. For example, A and/or B can represent: A alone, both A and B, and B alone, where A and B can be singular or plural. The character "/" generally indicates that associated objects in the context are in an "or" relationship. "At least one of the following items" or a similar expression means any combination of these items includes a single item or any combination of a plurality of items. For example, at least one of a, b, or c can represent: a, b, c, a-b, a-c, b-c, or a-b-c, where a, b and c can be single or multiple.

It should be noted that "when..." in an embodiment of this application may be instantaneous occurrence time of a case, or may be a period of time after occurrence of a case. This is not specifically limited in an embodiment of this application. In addition, a display interface provided in an embodiment of this application is merely taken as an example, and may further include more or fewer contents.

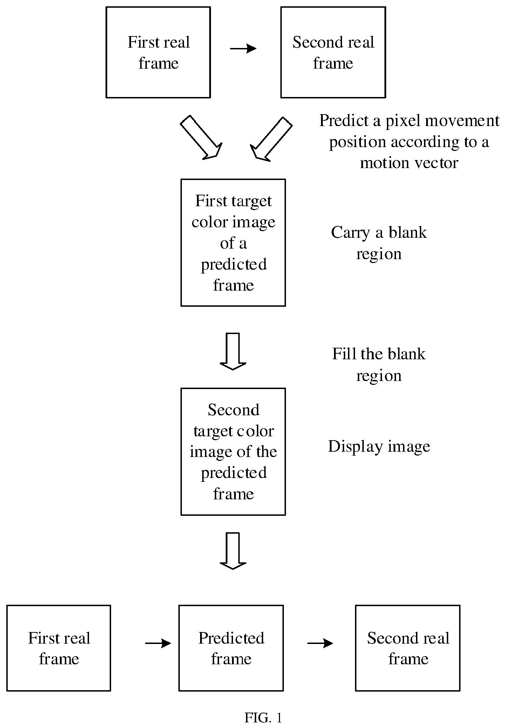

FIG. 1 is a schematic diagram of a principle of generating a predicted frame according to an embodiment of this application. As shown in FIG. 1, a predicted frame may refer to a predicted image generated according to information such as motion vectors of two real frames. The predicted frame may be used for being inserted between, before or after the two real frames. This is not limited in an embodiment of this application. The above two real frames may generally refer to two continuous real frames. An example in which two real frames are a first real frame and a second real frame is taken for description in FIG. 1.

Before the predicted frame is generated, related information of two real frames is required to be acquired first, such as color images of the real frames, a motion vector diagram between the two real frames, scenario depth information of the real frames, and camera angles of the two real frames. Such information may be acquired when the two real frames are rendered, for example, acquired by a rendering instruction stream.

According to the motion vector diagram between the two real frames, positions of pixels of the color images of the real frames in the predicted frame can be predicted, and then the pixels are placed at corresponding positions in the predicted frame, such that the first target color image of the predicted frame is obtained. When pixels are moved according to the motion vector diagram, some blank regions of which matching relationships cannot be found between two real frames may appear. Pixels filling the blank regions may be computed through a pixel filling algorithm, such that a color image of the predicted frame finally displayed is obtained. The pixel filling algorithm refers to a process of restoring and reconstructing pixels in a damaged region in an image. As an example rather than a limitation, the pixel filling algorithm may include an image inpainting (image inpainting) algorithm and the like.

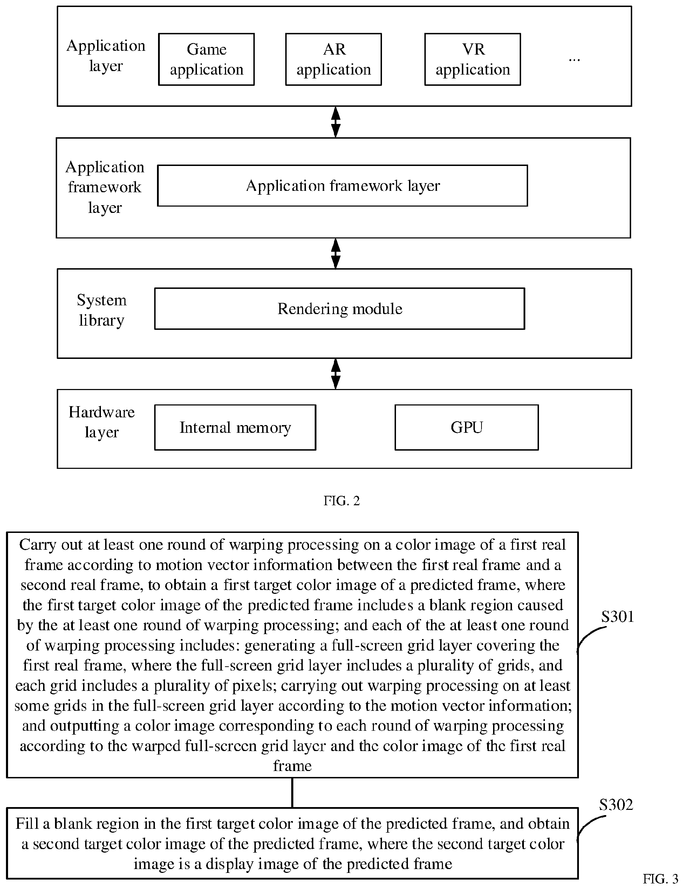

FIG. 2 is a block diagram of a software architecture of an apparatus 100 for image processing according to an embodiment of this application. A software system of the apparatus 100 is divided to several layers by a layered architecture, and each layer has a clear role and task. The layers are in communication with each other through a software interface. In some embodiments, the software system may be divided to four layers, which are an application layer (applications), an application framework layer (application framework), a system library and a hardware layer. It should be understood that only functional modules related to a method for image processing in an embodiment of this application are shown in FIG. 2. In practice, more or fewer functional modules may be included in the apparatus 100, or some of the functional modules may be replaced with other functional modules.

The application layer may include a series of application packages. As shown in FIG. 2, the application layer includes game applications, AR applications, VR applications, and the like.

The application framework layer provides an application programming interface (application programming interface, API) and a programming framework for applications at the application layer. The application framework layer includes some predefined functions. As shown in FIG. 2, the application framework layer may include an application framework. The application framework (FrameWork) may provide the application layer with encapsulation of numerous functional modules that may be called and an API interface.

As shown in FIG. 2, the system library may include a rendering module. The rendering module may be configured to implement three-dimensional graphics drawing, image rendering, composition, layer processing, and the like. As an example rather than a limitation, the rendering module includes but is not limited to at least one of: an open graphics library (open graphics library, OpenGL), an open source computer vision library (open source computer vision library, OpenCV), and an open computing language library (open computing language library, OpenCL).

The hardware layer includes a memory (memory) and a graphics processing unit (GPU). The memory may be configured to temporarily store arithmetic data in a central processing unit (central processing unit, CPU) and data exchanged with an external memory such as a hard disk.

The GPU is a processor that performs image and graphics related operations. In an embodiment of this application, a process in which the apparatus 100 carries out graphics processing by using the rendering module may be implemented by the GPU.

When an application (such as a game application) is required to play video, a rendering instruction to transmit a video frame may be transmitted to the application framework, and the application framework calls the rendering module to carry out image rendering. In the rendering process, the rendering module may carry out rendering computation on the image by using the GPU, and picture data after rendering is obtained and may be stored in the memory. When an image is required to be displayed, the application framework may read picture data of the image from the memory and transmit the picture data to a buffer region of the display, such that the image is displayed.

Optionally, in an embodiment of this application, the apparatus 100 may refer to an electronic device having an image processing function. As an example, the apparatus 100 may include but is not limited to a mobile phone, a tablet computer, a palm computer, a notebook computer, a wearable device, a virtual reality (virtual reality, VR) device, an augmented reality (augmented reality, AR) device, and the like. This is not limited in an embodiment of this application.

Technical solutions of this application and how the technical solutions of this application solve the above technical problems will be described in detail below with particular embodiments. The following several specific embodiments may be independently implemented, and may be combined with each other, and the same or similar concepts or processes may not be described repeatedly in some embodiments.

As described above, to improve quality of a display image of a generated predicted frame, embodiments of this application provide a method and an apparatus for image processing. In this method, a full-screen grid layer covering a real frame is generated when a predicted frame is generated, and a color image including a blank region is obtained through one or more rounds of warping processing on the full-screen grid layer according to a motion vector between two real frames. The color images of the predicted frame are obtained by warping the full-screen grid layer, and an accuracy degree of the predicted frame can be improved accordingly. Further, in each round of warping processing, warping may be carried out on different types of objects in the image, and the image of the predicted frame is obtained according to results of a plurality of times of warping, such that an accuracy degree and image quality of the predicted frame are further improved.

FIG. 3 is a schematic flow diagram of a method for image processing according to an embodiment of this application. The method may be performed by the apparatus 100 in FIG. 2. As shown in FIG. 3, the method includes the following contents.

S301: Carry out at least one round of warping processing on a color image of a first real frame according to motion vector information between the first real frame and a second real frame, to obtain a first target color image of a predicted frame. The first target color image of the predicted frame includes a blank region caused by the at least one round of warping processing.

Each of the at least one round of warping processing includes: generating a full-screen grid layer covering the first real frame, where the full-screen grid layer includes a plurality of grids, and each grid includes a plurality of pixels; carrying out warping processing on at least some grids in the full-screen grid layer according to the motion vector information; and outputting a color image corresponding to each round of warping processing according to the warped full-screen grid layer and the color image of the first real frame.

Optionally, the first real frame and second real frame mentioned above may include continuous real frames or may include non-continuous real frames. The above predicted frame may be inserted between, before or after the first real frame and the second real frame.

Optionally, the above first real frame may refer to a front frame image or a back frame image between the two real frames.

In some examples, the motion vector information between the first real frame and second real frame mentioned above may be obtained when the first real frame and the second real frame are rendered. As an example, the above motion vector information may include different types of motion vector information. For example, the motion vector information may include motion vector information of a static object and motion vector information of a dynamic object. The motion vector information of the dynamic object may include motion vector information of an ordinary dynamic object and motion vector information of a dynamic object having a skeletal animation.

Optionally, the plurality of rounds of warping processing mentioned above may correspond to a plurality of warping types. Different warping types carry out warping operations on different objects in the first real frame. As an example, the above warping types include at least one of: a warping operation performed on a static object; a warping operation performed on a dynamic object; a warping operation performed on a static object in a long shot; a warping operation performed on a dynamic object in a close shot; a warping operation performed on a dynamic object in a long shot; and a warping operation performed on a static object in a close shot.

It should be understood that in each round of warping processing, a warping operation may be carried out on an object having the same attribute in the first real frame. For example, a warping operation is carried out on a static object, or a warping operation is carried out on a dynamic object.

In each round of warping processing, warping may be carried out on different objects in an image, and an image of the predicted frame is obtained according to results of a plurality of times of warping. An operation is carried out on only one object in each round of warping operation, and the rest parts are discarded. The results of the plurality of times of warping are combined to a color image having a blank region. By carrying out warping operations on different types of objects, an accuracy degree of a color image finally obtained can be improved, and image quality is further improved.

The above full-screen grid layer may be used for overlaying the entire screen picture. Each grid may be square or rectangular. Density of the grids in the full-screen grid layer may be expressed as a resolution. The more and denser the grids in the full-screen grid layer, the higher the resolution, and conversely the lower the resolution. Several pixels are included in each grid. The higher the resolution of the grids, the less the pixels included in each grid. The pixels included in each grid may be represented as m×m, and m is an integer greater than 1. For example, the pixels included in each grid may be 6×6, or 8×8. That is, each grid includes 6 rows by 6 columns of pixels, or 8 rows by 8 columns of pixels.

Optionally, a plurality of types of resolutions may be set for the full-screen grid layer. A resolution of a full-screen grid layer generated in each round of warping processing may be the same or different, which may be determined according to an object on which a warping operation is carried out in each round of warping processing. For example, a resolution of a full-screen grid layer may be set to be low for a long-shot image or a static object. A resolution of a full-screen grid layer may be set to be high for a close-shot image or a dynamic object. Since a dynamic object is in a state of motion, and a close-shot image is closer to a camera and more affected by a prediction error of a motion vector, a more accurate predicted image can be obtained by using a higher resolution for grid warping.

A close-shot image refers to an object closer to a camera in a scenario, and a long-shot image refers to an object farther from the camera in a scenario. In an embodiment of this application, the camera refers to a virtual camera in a rendering scenario. A three-dimensional scenario can be observed from an angle and a direction by using the virtual camera, such that a display picture of the three-dimensional scenario is acquired. By changing an angle and orientation of the virtual camera, different display pictures of the three-dimensional scenario can be seen.

Optionally, whether an object to undergo a warping operation is a close-shot image or a long-shot image can be determined by using a scenario depth map of the first real frame. The scenario depth map is used for indicating depth information of pixels in the first real frame. For example, if depths of most pixels of the object to undergo the warping operation are greater than a preset threshold, the object is determined as a long-shot image. If the depths of the most pixels of the object to undergo the warping operation are less than the preset threshold, the object is determined as a close-shot image.

Optionally, whether an object to undergo a warping operation is a dynamic object or a static object may be determined according to a full-screen semantic image of the first real frame. The full-screen semantic image, which may also be referred to as a mask image, refers to an image for marking different types of regions of the first real frame, and may be obtained by masking the first real frame. By sampling the full-screen semantic image, a type of any pixel in the first real frame can be determined. For example, in the full-screen semantic image, a pixel value of a region where a static object is located may be marked as 0, a pixel value of a region where an ordinary dynamic object is located may be marked as 1, and a pixel value of a dynamic object having a skeletal animation may be marked as 2.

In some examples, in a solution for determining a resolution of a used full-screen grid layer, either a fixed resolution or a variable resolution may be used for full-screen grid layers corresponding to a plurality of rounds of warping operation. For example, grids having a high resolution are used in a plurality of rounds of warping operations. Alternatively, to save computational power and power consumption, a resolution to be used may be determined according to different objects of each round of warping operation. For example, if an object to undergo a round of warping processing is a static object in a long shot, a low resolution may be used, and a high resolution may be used in the rest cases.

For example, in a case that an object to undergo an i^{th} round of processing of the at least one round of warping processing is a static object in a long shot, a resolution of a full-screen grid layer used in the i^{th} round of processing is set as a first resolution, where i is an integer greater than or equal to 1. In a case that the object to undergo the i^{th} round of processing of the at least one round of warping processing is a static object or a dynamic object in a close shot, a resolution of the full-screen grid layer used in the i^{th} round of processing is set as a second resolution. The first resolution is lower than the second resolution.

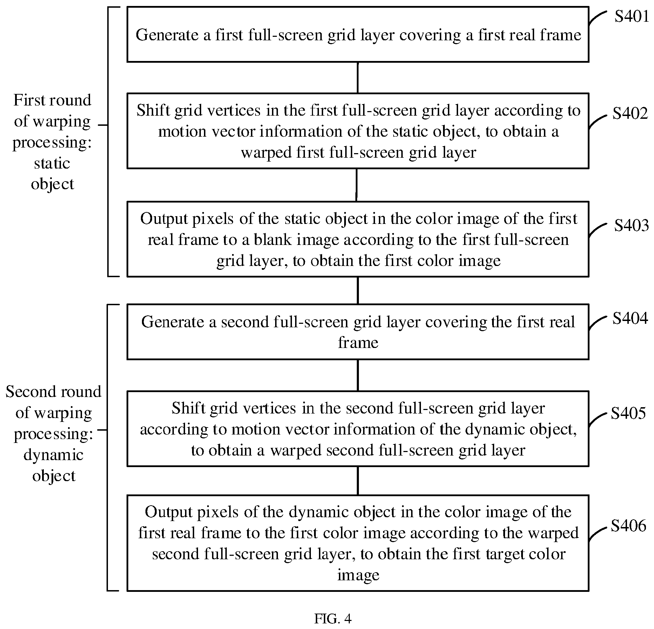

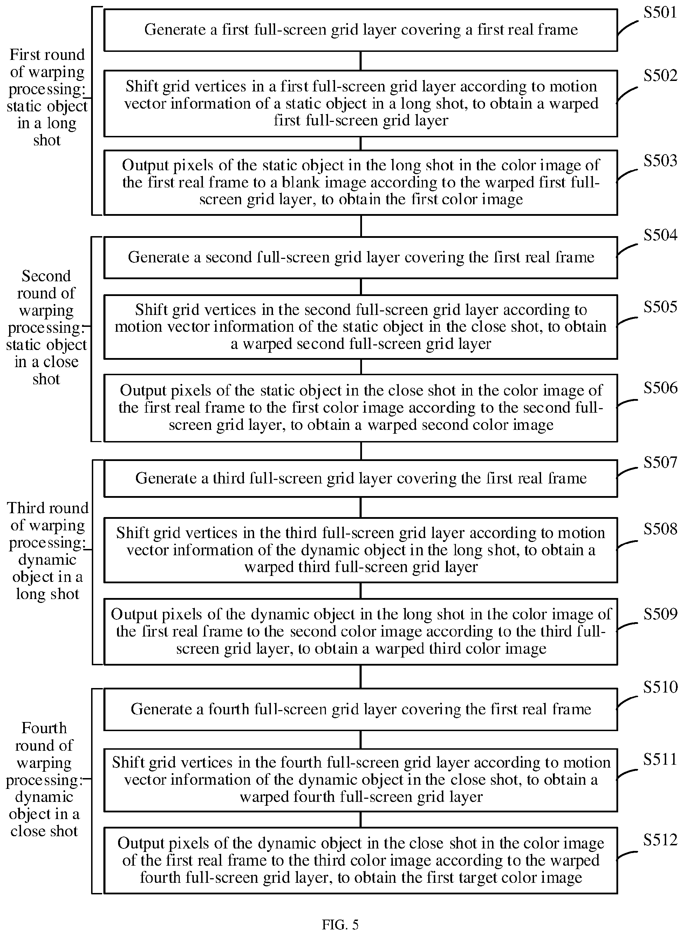

A specific implementation of each round of warping processing can be obtained with reference to the related descriptions in FIG. 4 and FIG. 5 hereinafter.

S302: Fill a blank region in the first target color image of the predicted frame, to obtain a second target color image of the predicted frame, where the second target color image is a display image of the predicted frame.

Optionally, when a blank region in a first target color image is filled, a fixed pixel filling algorithm may be used, or a target pixel filling algorithm is selected from a plurality of candidate pixel filling algorithms according to a threshold range to which a camera angle belongs to fill the blank region. Since different pixel filling algorithms are suitable for different scenarios, by flexibly selecting a pixel filling algorithm for filling a blank region according to a threshold of a camera angle, a prediction accuracy degree and image quality of a display image of a predicted frame can be improved.

For example, a threshold range to which a camera angle between the first real frame and the second real frame belongs is determined. A target pixel filling algorithm is selected from at least two candidate pixel filling algorithms according to the threshold range to which the camera angle belongs. The blank region in the first target color image is filled, and the second target color image is obtained according to the target pixel filling algorithm.

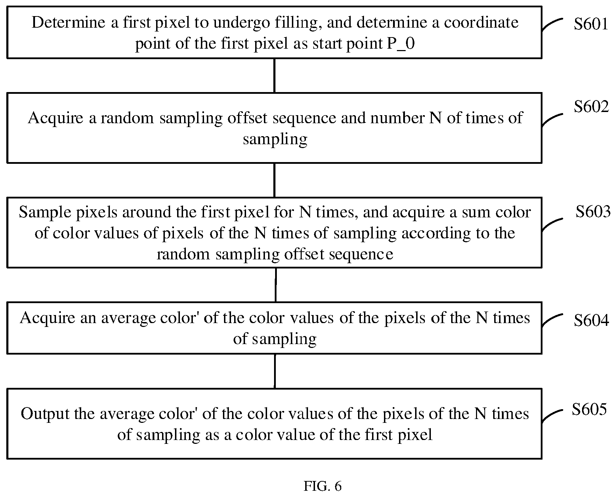

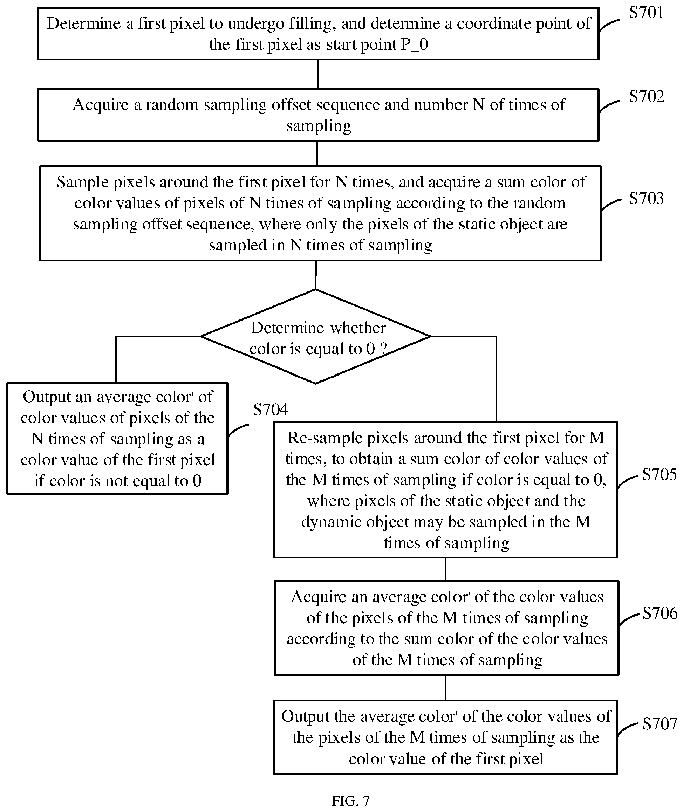

In some examples, a first candidate pixel filling algorithm and a second candidate pixel filling algorithm may be set, which are suitable for a large camera angle and a small camera angle respectively. For example, a first pixel filling algorithm is selected as the target pixel filling algorithm in a case that the camera angle is less than a first angle threshold. The first pixel filling algorithm implements pixel filling by sampling pixels of a static object around a pixel to undergo filling. A second pixel filling algorithm is selected as the target pixel filling algorithm in a case that the camera angle is greater than the first angle threshold. The second pixel filling algorithm implements pixel filling by sampling pixels of static objects as well as dynamic objects around the pixel to undergo filling. A specific value of the first angle threshold may be determined according to practice, and will not be repeated herein. A specific implementation of a pixel filling algorithm can be obtained with reference to related descriptions in FIG. 6 and FIG. 7 hereafter.

As described above, types of objects of all of the at least one round of warping processing are different. A number of rounds of warping processing may be determined according to an object type of warping processing. A specific process of carrying out warping processing on an image in an embodiment of this application will be described below with FIG. 4 and FIG. 5 as examples.

FIG. 4 is a schematic diagram of carrying out warping processing on a color image of a first real frame according to an embodiment of this application. As shown in FIG. 4, the at least one round of warping processing mentioned above includes two rounds of warping processing. A first round of warping processing is warping processing for a static object and a second round of warping processing is warping processing for a dynamic object. Optionally, an order of objects to undergo warping processing is not limited in an embodiment of this application. Warping processing for a dynamic object may be performed first, and then warping processing for a static object may be performed.

Optionally, resolutions of a first full-screen grid layer and a second full-screen grid layer corresponding to two rounds of warping processing respectively may be the same or different. For example, in a case that the resolutions are the same, the resolution of the first full-screen grid layer and the resolution of the second full-screen grid layer are both 8×8. Alternatively, in a case that the resolutions are different, the resolution of the first full-screen grid layer is lower than that of the second full-screen grid layer. For example, the resolution of the first full-screen grid layer is 16×16 and the resolution of the second full-screen grid layer is 8×8.

Specifically, the first round of warping processing may include the following steps:
S401: Generate a first full-screen grid layer covering a first real frame.
S402: Shift grid vertices in the first full-screen grid layer according to motion vector information of a static object, to obtain a warped first full-screen grid layer.

In a grid warping process, only grid vertices are shifted and stretched according to motion vector information of a static object, and not each pixel is shifted and stretched such that computational efficiency of a warping operation can be improved.

S403: Output pixels of the static object in the color image of the first real frame to a blank image according to the warped first full-screen grid layer, to obtain the first color image.

The blank image may be a blank image newly created. When the first color image is acquired, whether each pixel in the color image of the first real frame belongs to pixels of a static object may be determined according to a full-screen semantic image of the first real frame. If so, the pixel is output to a blank image. If not, the pixel is discarded. That is, only pixels of a static object are output to the blank image, while pixels of the rest types of objects are discarded.

For example, a specific process of obtaining the first color image includes: determining whether a first pixel belongs to the static object or the dynamic object according to a full-screen semantic image of the first real frame, where the first pixel is any pixel in the color image of the first real frame; outputting, in a case that the first pixel belongs to the static object, the first pixel to a first position in the blank image, to obtain the first color image, where the first position is a corresponding position of the first pixel in the warped first full-screen grid layer; and skipping outputting the first pixel to the blank image in a case that the first pixel belongs to the dynamic object.

A second round of warping processing may include the following steps:
S404: Generate a second full-screen grid layer covering the first real frame.
S405: Shift grid vertices in the second full-screen grid layer according to motion vector information of a dynamic object, to obtain a warped second full-screen grid layer.

In a grid warping process, only grid vertices are shifted and stretched according to motion vector information of a dynamic object, and not each pixel is shifted and stretched such that computational efficiency of a warping operation can be improved.

Optionally, the above motion vector information of the dynamic object may include motion vector information of an ordinary dynamic object and motion vector information of a dynamic object having a skeletal animation.

S406: Output pixels of the dynamic object in the color image of the first real frame to the first color image according to the warped second full-screen grid layer, to obtain the first target color image.

When the first target color image is acquired, whether each pixel in the color image of the first real frame belongs to pixels of a dynamic object may be determined according to a full-screen semantic image of the first real frame. If so, the pixel is output to a first color image. If not, the pixel is discarded. That is, only pixels of a dynamic object are output to the first color image, while pixels of the rest types of objects are discarded.

For example, a specific process of obtaining the first target color image includes: determining whether a second pixel belongs to a static object or a dynamic object according to a full-screen semantic image of the first real frame, where the second pixel is any pixel in the color image of the first real frame; outputting, in a case that the second pixel belongs to the dynamic object, the second pixel to a second position in the first color image, to obtain the first target color image, where the second position is a corresponding position of the second pixel in the warped second full-screen grid layer; and skipping outputting the second pixel to the first color image in a case that the second pixel belongs to the static object.

FIG. 5 is a schematic diagram of carrying out warping processing on a color image of a first real frame according to another embodiment of this application. As shown in FIG. 5, the at least one round of warping processing mentioned above includes four rounds of warping processing. A first round of warping processing is warping processing for a static object in a long shot. A second round of warping processing is warping processing for a static object in a close shot. A third round of warping processing is warping processing for a dynamic object in a long shot. A fourth round of warping processing is warping processing for a dynamic object in a close shot. Optionally, an order of objects to undergo warping processing is not limited in an embodiment of this application. An order of objects of the plurality of rounds of warping processing mentioned above may also be changed.

Optionally, resolutions of the first full-screen grid layer to the fourth full-screen grid layer corresponding to the four rounds of warping processing mentioned above may be the same or different. In a case that the resolutions are different, the resolution of the first full-screen grid layer may be lower than that of the rest three full-screen grid layers. For example, the resolution of the first full-screen grid layer is 16×16, and the resolution of the second full-screen grid layer to the fourth full-screen grid layer is 8×8.

Specifically, the first round of warping processing is warping processing for a static object in a long shot. The first round of warping processing may include the following steps:
S501: Generate a first full-screen grid layer covering a first real frame.
S502: Shift grid vertices in the first full-screen grid layer according to motion vector information of a static object in a long shot, to obtain a warped first full-screen grid layer.
S503: Output pixels of the static object in the long shot in the color image of the first real frame to a blank image according to the warped first full-screen grid layer, to obtain the first color image.

Optionally, when the first color image is acquired, whether each pixel in the color image of the first real frame belongs to pixels of a static object may be determined according to a full-screen semantic image of the first real frame. If so, whether the pixel belongs to a long-shot image is further determined according to a scenario depth map. If the pixel belongs to the long-shot image, the pixel is output to a blank image. If the pixel does not belong to a static object or the long-shot image, the pixel is discarded. That is, only pixels of a static object in a long shot are output to the blank image, while pixels of the rest types of objects are discarded.

For example, whether a first pixel belongs to the static object or the dynamic object is determined according to a full-screen semantic image of the first real frame. The first pixel is any pixel in the color image of the first real frame. Whether a depth of the first pixel is greater than a preset depth threshold D is determined according to a scenario depth map of the first real frame in a case that the first pixel belongs to a static object. The first pixel is output to a first position in the blank image, and the first color image is obtained in a case that the depth of the first pixel is greater than a preset depth threshold D. The first position is a corresponding position of the first pixel in the warped first full-screen grid layer. The first pixel does not output to the blank image in a case that the depth of the first pixel is less than the preset depth threshold D. The first pixel does not output to the blank image in a case that the first pixel belongs to a dynamic object.

Optionally, if the depth of the first pixel is greater than a preset depth threshold D, it indicates that the first pixel belongs to a long-shot image. If the depth of the first pixel is less than the preset depth threshold D, it indicates that the first pixel belongs to a close-shot image. A specific value of preset depth threshold D mentioned above may be determined according to practice.

The second round of warping processing is warping processing for a static object in a close shot. The second round of warping processing may include the following steps:
S504: Generate a second full-screen grid layer covering the first real frame.
S505: Shift grid vertices in the second full-screen grid layer according to motion vector information of the static object in the close shot, to obtain a warped second full-screen grid layer.
S506: Output pixels of the static object in the close shot in the color image of the first real frame to the first color image according to the warped second full-screen grid layer, to obtain a second color image.

Optionally, when the second color image is acquired, whether each pixel in the color image of the first real frame belongs to pixels of a static object may be determined according to a full-screen semantic image of the first real frame. If so, whether the pixel belongs to a close-shot image is further determined according to a scenario depth map. If the pixel belongs to the close-shot image, the pixel is output to a first color image. If the pixel does not belong to a static object or the close-shot image, the pixel is discarded. That is, only pixels of a static object in a close shot are output to the first color image, while pixels of the rest types of objects are discarded.

The third round of warping processing is warping processing for a dynamic object in a long shot. The third round of warping processing may include the following steps:
S507: Generate a third full-screen grid layer covering a first real frame.
S508: Shift grid vertices in the third full-screen grid layer according to motion vector information of the dynamic object in the long shot, to obtain a warped third full-screen grid layer.
S509: Output pixels of the dynamic object in the long shot in the color image of the first real frame to the second color image, to obtain a third color image according to the warped third full-screen grid layer.

When the third color image is acquired, whether each pixel in the color image of the first real frame belongs to pixels of a dynamic object may be determined according to a full-screen semantic image of the first real frame. If so, whether the pixel belongs to a long-shot image is further determined according to a scenario depth map. If the pixel belongs to the long-shot image, the pixel is output to a second color image. If the pixel does not belong to the long-shot image, the pixel is discarded. That is, only pixels of a dynamic object in a long shot are output to the second color image, while pixels of the rest types of objects are discarded.

The fourth round of warping processing is warping processing for a dynamic object in a close shot. The fourth round of warping processing may include the following steps:
S510: Generate a fourth full-screen grid layer covering the first real frame.
S511: Shift grid vertices in the fourth full-screen grid layer according to motion vector information of the dynamic object in the close shot, to obtain a warped fourth full-screen grid layer.
S512: Output pixels of the dynamic object in the close shot in the color image of the first real frame to the third color image according to the warped fourth full-screen grid layer, to obtain the first target color image.

When the first target color image is acquired, whether each pixel in the color image of the first real frame belongs to pixels of a dynamic object may be determined according to a full-screen semantic image of the first real frame. If so, whether the pixel belongs to a close-shot image is further determined according to a scenario depth map. If the pixel belongs to the close-shot image, the pixel is output to a third color image. If the pixel does not belong to the close-shot image, the pixel is discarded. That is, only pixels of a dynamic object in a close shot are output to the third color image, while pixels of the rest types of objects are discarded.

The pixel filling algorithm will be introduced below in combination with FIG. 6 and FIG. 7. It should be noted that a principle of the pixel filling algorithm is: a current pixel to undergo filling in a first target color image of a predicted frame is taken as start point P_0, color values of pixels around start point P_0 are repeatedly sampled according to random sampling offset, results of a plurality of times of sampling are averaged, and a color value of the pixel to undergo filling is obtained. In a case that a camera angle is less, considering that a change degree of a dynamic object between video frames is large, while a change degree of a static object is less, a blank region may be filled with sampling pixels of the static object while pixels of the dynamic object are discarded for accuracy of pixel filling. In a case that the camera angle is large, the change degree of the static object is also large, and effective pixels may not be sampled by only sampling the pixels of the static object. Thus, the pixels of the static object and the dynamic object can be simultaneously sampled through the second pixel filling algorithm, such that the blank region is filled.

FIG. 6 is a schematic flow diagram of a first pixel filling algorithm according to an embodiment of this application. The first pixel filling algorithm in FIG. 6 is suitable for a small camera angle. With reference to FIG. 6, the first pixel filling algorithm includes the following contents.

S601: Determine a first pixel to undergo filling, and determine a coordinate point of the first pixel as start point P_0.

The first pixel is any pixel in the blank region in the first target color image.

S602: Acquire a random sampling offset sequence and number N of times of sampling.

The random sampling offset sequence is used for providing random sampling offset such that an offset step size and sampling direction of sampling can be provided for each time of pixel sampling. For example, the sampling offset may be represented as (Δx, Δy). Number N of times of sampling is used for stipulating a number of times of sampling pixels around the first pixel, and N is an integer greater than 1.

S603: Sample pixels around the first pixel for N times, and acquire a sum color of color values of pixels of the N times of sampling according to the random sampling offset sequence.

For example, in an i^{th} time of sampling of N times of sampling, sampling offset offset_i may be obtained from the random sampling sequence in sequence, and sampling coordinate P_i=P_0+offset_i is computed. In the above equation, i is an integer greater than or equal to 1, and 1≤i≤N.

The first target color image and the full-screen semantic image are sampled according to sampling coordinate P_i. If a pixel of the sampled full-screen semantic image represents a static pixel, color value results of pixels of the sampled first target color image are added to color. If the sampled full-screen semantic image represents a dynamic pixel, no operation is carried out.

S604: Acquire an average color' of the color values of the pixels of the N times of sampling.

The average color' may be expressed as: color'=color/N.

S605: Output the average color' of the color values of the pixels of the N times of sampling as a color value of the first pixel.

It should be noted that FIG. 6 is example description of a first pixel filling algorithm. In practice, steps in FIG. 6 may be appropriately modified, added or deleted, and obtained solutions still fall within the scope of protection of embodiments of this application.

FIG. 7 is a schematic flow diagram of a second pixel filling algorithm according to an embodiment of this application. FIG. 7 is suitable for a large camera angle. With reference to FIG. 7, the second pixel filling algorithm includes the following contents.

S701: Determine a first pixel to undergo filling, and determine a coordinate point of the first pixel as start point P_0.

The first pixel is any pixel in the blank region in the first target color image.

S702: Acquire a random sampling offset sequence and number N of times of sampling.

The random sampling offset sequence is used for providing random sampling offset such that an offset step size and sampling direction of sampling can be provided for each time of pixel sampling. For example, the sampling offset may be represented as (Δx, Δy). Number N of times of sampling is used for stipulating a number of times of sampling pixels around the first pixel, and N is an integer greater than 1.

S703: Sample pixels around the first pixel for N times, and acquire a sum color of color values of pixels of N times of sampling according to the random sampling offset sequence, where only the pixels of the static object are sampled in N times of sampling.

For example, in an i^{th} time of sampling of N times of sampling, sampling offset offset_i may be obtained from the random sampling sequence in sequence, and sampling coordinate P_i=P_0+offset_i is computed. In the above equation, i is an integer greater than or equal to 1, and 1≤i≤N.

The first target color image and the full-screen semantic image are sampled according to sampling coordinate P_i. If a pixel of the sampled full-screen semantic image represents a static pixel, color value results of pixels of the sampled first target color image are added to color. If the sampled full-screen semantic image represents a dynamic pixel, no operation is carried out.

S704: Output an average color' of color values of pixels of the N times of sampling as a color value of the first pixel if color is not equal to 0.

The average color' may be expressed as: color'=color/N.

S705: Re-sample pixels around the first pixel for M times, to obtain a sum color of color values of the M times of sampling if color is equal to 0. Pixels of the static object and the dynamic object may be sampled in the M times of sampling, and M is an integer greater than 1.

S706: Acquire an average color' of the color values of the pixels of the M times of sampling according to the sum color of the color values of the M times of sampling.

S707: Output the average color' of the color values of the pixels of the M times of sampling as the color value of the first pixel.

It should be noted that FIG. 7 is example description of a second pixel filling algorithm. In practice, steps in FIG. 7 may be appropriately modified, added or deleted, and obtained solutions still fall within the scope of protection of embodiments of this application.

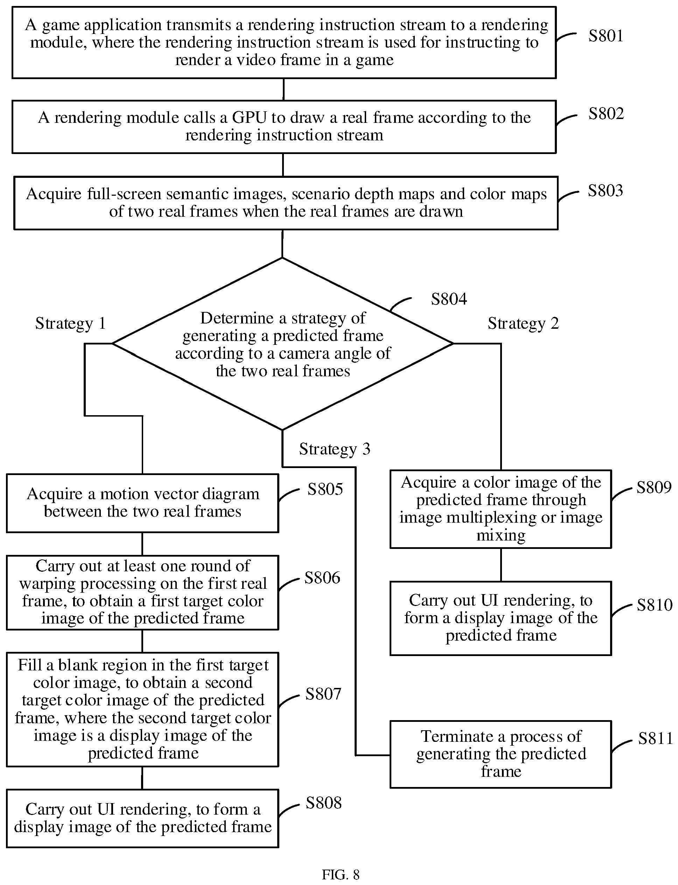

FIG. 8 is a schematic flow diagram of a rendering process according to an embodiment of this application. Rendering of a display interface in a gaming application is taken as an example for description in FIG. 8. As shown in FIG. 8, the method includes the following contents.

S801: A game application transmits a rendering instruction stream to a rendering module. The above rendering instruction stream is used for instructing to render a video frame in a game.

The rendering module may obtain a user interface (user interface, UI) instruction when processing the rendering instruction stream. For example, the rendering module may identify instructions used for drawing a game UI according to features of the game rendering instruction. The UI instructions include but are not limited to a resource binding instruction, a state setting instruction, a drawing instruction, and the like. These instructions are saved in an instruction stream buffer region for subsequent use.

S802: The rendering module calls a GPU to draw a real frame according to the rendering instruction stream.

S803: Acquire full-screen semantic images, scenario depth maps and color maps of two real frames when the real frames are drawn.

When the real frames are drawn, dynamic and static discrimination is carried out on each rendering instruction according to the features of the game rendering instructions, material information, instruction invocation rules, and the like. If a static object is to be drawn, stencil value of the rendering instruction is set as 0. Specifically, stencil value represents a template value. If an ordinary dynamic object is to be drawn, stencil value of the rendering instruction is set as 1. If a dynamic object having a skeletal animation is to be drawn, model three-dimensional space coordinate information of two continuous frames is saved to a buffer region for subsequent motion vector computation, and stencil value of the rendering instruction is set as 2.

After the rendering instruction is completed, a full-screen semantic graph may be generated. A pixel value covered by a static object is 0, a pixel value covered by an ordinary dynamic object is 1, and a pixel value covered by a dynamic object having a skeletal animation is 2.

S804: Determine a strategy of generating a predicted frame according to a camera angle of the two real frames.

If the camera angle is less than or equal to a second preset angle, strategy 1 may be performed. If the camera angle is greater than or equal to a third preset angle, strategy 2 may be performed. If the camera angle is an angle between the second preset angle and the third preset angle, strategy 3 is performed.

The third preset angle is greater than the second preset angle. Specific values of the second preset angle and the third preset angle may be determined according to practice, and are not limited herein. As an example, the second preset angle may be 2 degrees, and the third preset angle may be 6 degrees.

Strategy 1 includes S805 to S808.

S805: Acquire a motion vector diagram between the two real frames.

Optionally, a specific method of acquiring the motion vector diagram is not limited in an embodiment of this application.

As an example, when a motion vector diagram is acquired, a motion vector of a dynamic object having a skeletal animation, a motion vector of an ordinary dynamic object, and a motion vector of a static object may be acquired through different computation methods respectively. The above three types of motion vectors are combined together, and the motion vector diagram is obtained.

By computing motion vectors of different types of objects through different computation methods, an accuracy degree of the motion vector of each type of object can be improved, and further an accuracy degree of the combined motion vector diagram is improved.

For example, a motion vector of a static object may be computed by using a scenario depth map and a change matrix of a virtual camera. Specifically, normalized device coordinates (normalized device coordinates, NDC) may be constructed by sampling depth values of corresponding positions of the scenario depth map and image coordinates of the sampled positions. After the NDC are acquired, image coordinates of world space coordinates of a current pixel on the predicted frame image are computed by using a camera space matrix and a projection matrix between the two real frames, and further motion vector data is acquired pixel by pixel.

A motion vector of a dynamic object having a skeletal animation may be computed according to a model thereof. For example, each model rendering instruction having a skeletal animation may be marked out in the rendering instruction stream of the real frame, and each model having a skeletal animation has a corresponding transform feedback buffer (Transform feedback buffer). A rendering algorithm of each model having a skeletal animation of the real frame is modified, and a function of saving NDC of each model vertex after coordinate transformation to a corresponding transform feedback buffer is added, such that image space coordinates of each vertex of a model having a skeletal animation in two real frames is obtained. A new rendering instruction is created, a motion vector of each vertex of the model having a skeletal animation is computed, and by using a rasterization function of the GPU, a motion vector corresponding to each pixel in a pixel region covered by the vertex is obtained through linear interpolation of the vertex motion vector.

A color value of a corresponding position of a color image of a first real frame and color value distribution of a surrounding region are sampled and image data closest to the image distribution is searched for on a color image of a second real frame through an iteratively optimized matching algorithm such that a motion vector of an ordinary dynamic object can be estimated. Coordinates in an image space are first computed according to vertex data of a dynamic object having a skeletal animation, and a motion vector is computed vertex by vertex by using a difference, and then rasterised and interpolated to pixel data to be rendered to a motion vector diagram.

The motion vector is computed by using a color image, a semantic image and a depth image. Data at a position, corresponding to each pixel on a motion vector diagram to be computed, on the semantic image is sampled, and semantic information is obtained.

S806: Carry out at least one round of warping processing on the first real frame, to obtain a first target color image of the predicted frame.

Specific description of carrying out at least one round of warping processing can be obtained with reference to related contents in FIG. 3 to FIG. 5, and will not be repeated herein for brevity.

S807: Fill a blank region in the first target color image, to obtain a second target color image of the predicted frame. The second target color image is a display image of the predicted frame.

A specific process of filling a blank region in the first target color image can be obtained with reference to related contents in FIG. 3, FIG. 6, and FIG. 7, and will not be repeated herein for brevity.

S808: Carry out UI rendering, to form a display image of the predicted frame.

As an example, the UI rendering includes: taking the display image of the predicted frame as a rendering target, performing a UI rendering instruction stream stored in S801 on the rendering target, and drawing UI information to the display image of the predicted frame, to forming a complete video frame capable of being displayed.

Strategy 2 includes S809 and S810.

S809: Acquire a color image of the predicted frame through image multiplexing or image mixing.

The image multiplexing is to output any one of two real frames as a color image of a predicted frame. The image mixing is to semi-transparently mix images of two real frames, and a mixed image is output as the color image of the predicted frame.

It should be understood that strategy 2 is suitable for a large camera angle between two real frames. If the camera angle is greater than or equal to the third preset angle, it indicates that a current game picture sharply shakes, such that information required for computation of the predicted frame is massively missing, and a result generated by an algorithm will be inaccurate. Thus, the predicted frame can be obtained through image multiplexing or image mixing.

S810: Carry out UI rendering, to form a display image of the predicted frame.

As an example, the UI rendering includes: taking the display image of the predicted frame as a rendering target, performing a UI rendering instruction stream stored in S801 on the rendering target, and drawing UI information to the display image of the predicted frame, to form a complete video frame capable of being displayed.

Strategy 3 includes S811.

S811: Terminate a process of generating the predicted frame.

It should be understood that if the camera angle between the two real frames is within a range between the second angle threshold and the third angle threshold, it indicates that the algorithm cannot generate a predicted frame image having acceptable picture quality in a current scenario. Thus, a frame prediction solution is exited, and normal rendering of the game is resumed.

The method for image processing provided in an embodiment of this application is described above in combination with FIG. 1 to FIG. 8, and an apparatus for performing the above method provided in an embodiment of this application will be described below.

To better understand the embodiments of this application, the structure of the apparatus for image processing in an embodiment of this application will be introduced below.

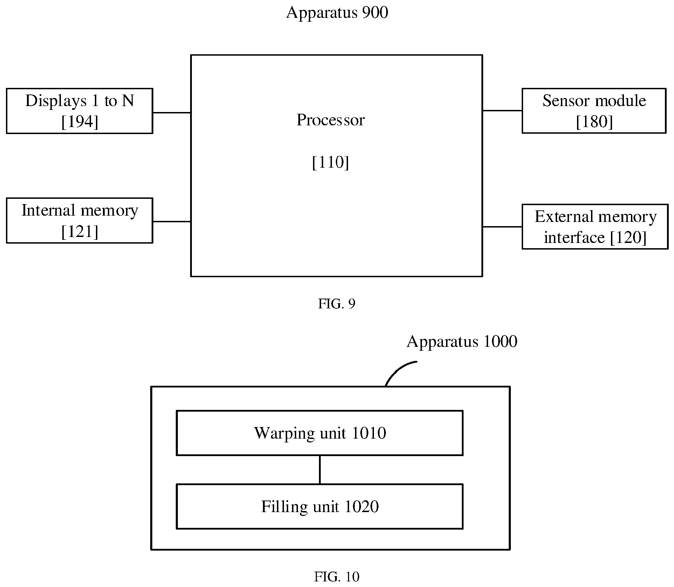

FIG. 9 is a schematic diagram of a hardware structure of an apparatus 900 for image processing. The apparatus 900 for image processing may include a processor 110, an external memory interface 120, an internal memory 121, a sensor module 180 and a display 194.

It can be understood that a schematic structure in an embodiment of this application does not constitute a specific limitation on the apparatus 900 for image processing. In some other embodiments of this application, the apparatus 900 for image processing may include more or fewer components than those shown in the figures, combine some components, split some components, or differently arrange components. The components shown in the figure may be implemented as hardware, software, or their combination.

The processor 110 may include one or more processing units. For example, the processor 110 may include an application processor (application processor, AP), a graphics processing unit (graphics processing unit, GPU), an image signal processor (image signal processor, ISP), a video codec, and the like. Different processing units may be separate devices, or may be integrated to one or more processors.

It can be understood that a schematic interface connection relationship between all modules in an embodiment of this application is merely schematic description, and does not constitute a limitation on the structure of the apparatus 900 for image processing. In some other embodiments of this application, the apparatus 900 for image processing may use an interface connection manner different from that in the above embodiments, or use combinations of a plurality of interface connection manners.

The apparatus 900 implements a display function by using the GPU, the display 194, the application processor, and the like. The GPU is a microprocessor for image processing and connects the display 194 and the application processor. The GPU is configured to perform mathematical and geometric computation, and is configured to render graphics. The processor 110 may include one or more GPUs that execute program instructions to generate or change display information.

The display 194 is configured to display an image, display video, receive a slide operation, and the like. The display 194 includes a display panel. A liquid crystal display (liquid crystal display, LCD), an organic light-emitting diode (organic light-emitting diode, OLED), an active-matrix organic light emitting diode (active-matrix organic light emitting, AMOLED), a flexible light-emitting diode (flex light-emitting diode, FLED), a Miniled, a MicroLed, a Micro-oLed, a quantum dot light emitting diodes (quantum dot light emitting diodes, QLED), and the like may be used as the display panel. In some embodiments, the apparatus 900 may include 1 or N displays 194, and N is a positive integer greater than 1.

The external memory interface 120 may be configured to be connected to an external memory card such as a micro SD card to expand a storage capability of the apparatus 900 for image processing. The external memory card is in communication with the processor 110 through the external memory interface 120 to store data, for example, store files such as music and video in the external memory card.

The internal memory 121 may be configured to store a computer-executable program code, and the executable program code includes instructions. The internal memory 121 may include a program storage region and a data storage region. The program storage region may store an operating system, an application required for at least one function (such as a sound playing function and an image playing function), and the like. The data storage region may store data (such as audio data and a telephone book) and the like established when the apparatus 900 for image processing is used.

The sensor module 180 may include a pressure sensor, a touch sensor, and the like.

FIG. 10 is a schematic structural diagram of an apparatus 1000 for image processing according to an embodiment of this application. The apparatus 1000 may include an electronic device, or may include a chip or a chip system in the electronic device. The apparatus 1000 includes functional units performing the method for image processing in FIG. 3 to FIG. 8.

As shown in FIG. 10, the apparatus 1000 includes a warping unit 1010 and a filling unit 1020.

The warping unit 1010 is configured to carry out at least one round of warping processing on a color image of a first real frame according to motion vector information between the first real frame and a second real frame, to obtain a first target color image of a predicted frame. The first target color image of the predicted frame includes a blank region caused by the at least one round of warping processing. Each of the at least one round of warping processing includes: generating a full-screen grid layer covering the first real frame, where the full-screen grid layer includes a plurality of grids, and each grid includes a plurality of pixels; carrying out warping processing on at least some grids in the full-screen grid layer according to the motion vector information; and outputting a color image corresponding to each round of warping processing according to the warped full-screen grid layer and the color image of the first real frame.

The filling unit 1020 is configured to fill a blank region in the first target color image of the predicted frame, to obtain a second target color image of the predicted frame. The second target color image is a display image of the predicted frame.

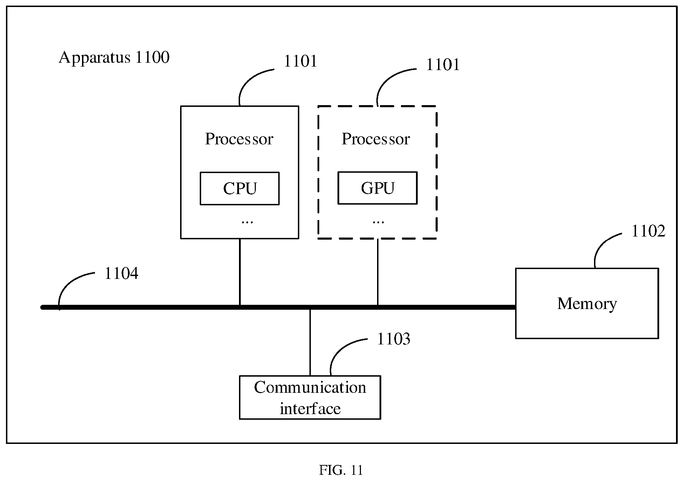

FIG. 11 is a schematic diagram of a hardware structure of an apparatus 1100 for image processing according to an embodiment of this application. As shown in FIG. 11, the apparatus 1100 includes a processor 1101, a communication line 1104 and at least one communication interface (for example, a communication interface 1103 is taken as an example for description in FIG. 11).

The processor 1101 may include a central processing unit (central processing unit, CPU), a microprocessor, an application-specific integrated circuit (application-specific integrated circuit, ASIC), a GPU or one or more integrated circuits configured to control a program in the solutions of this application to be executed.

The communication line 1104 may include a circuit configured to transmit information between the above components.

The communication interface 1103 is configured to be in communication with another device or a communication network such as an Ethernet and wireless local area network (wireless local area network, WLAN) by using an apparatus such as a transceiver.

Optionally, the apparatus for image processing may further include a memory 1102.

The memory 1102 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile optical disc and a blu-ray disc), a magnetic disc storage medium or another magnetic storage device, or another medium that can be used for carrying or storing a desired program code in the form of instructions or a data structure and can be accessed by a computer. This is not limited thereto. The memory may independently exist, and is connected to the processor by using the communication line 1104. The memory may also be integrated with the processor.

The memory 1102 is configured to store computer-executable instructions for performing a solution of this application, and is controlled and performed by the processor 1101. The processor 1101 is configured to execute the computer-executable instructions stored in the memory 1102 to implement a method for clipping video provided in an embodiment of this application.

Optionally, the computer-executable instructions in an embodiment of this application may also be referred to as application code. This is not specifically limited in an embodiment of this application.

As shown in FIG. 11, during specific implementation, as an embodiment, the processor 1101 may include one or more CPUs, or include one or more GPUs.

An embodiment of this application provides an electronic device. This electronic device includes: a processor and a memory. The memory stores computer-executable instructions. The processor executes the computer-executable instructions stored in the memory to cause the electronic device to perform the above method for image processing.

An embodiment of this application provides a chip. The chip includes a processor. The processor is configured to call a computer program in a memory to perform the method for image processing in the above embodiments. Its implementation principles and technical effects are similar those in the above related embodiments, and will not be repeated herein.

An embodiment of this application further provides a computer-readable storage medium. The computer-readable storage medium stores a computer program. The computer program implements the above method when performed by a processor. All or some of the methods described in the above embodiments may be implemented by using software, hardware, firmware or their combinations. If the methods are implemented in software, a function may be stored or transmitted on a computer-readable medium as one or more instructions or codes. The computer-readable medium may include a computer storage medium and a communications medium, and may further include any medium that can transmit a computer program from one place to another. The storage medium may be any target medium that can be accessed by a computer.

In a possible implementation, the computer-readable medium may include a RAM, a ROM, a compact disc read-only memory (compact disc read-only memory, CD-ROM) or other optical disc memories, a magnetic disc memory or other magnetic storage devices, or other media that are to carry or store a required program code in a form of an instruction or a data structure, and may be accessed by a computer. Moreover, any connection is appropriately referred to as a computer-readable medium. For example, if software is transmitted from a website, a server or other remote sources by using a coaxial cable, an optical fiber cable, a twisted pair, a digital subscriber line (Digital Subscriber Line, DSL) or wireless technologies (such as infrared ray, radio and microwave), the coaxial cable, optical fiber cable, twisted pair, DSL or wireless technologies such as infrared ray, radio and microwave are included in the definition of the medium. A magnetic disc and an optical disc used herein include an optical disc, a laser disc, an optical disc, a digital versatile disc (Digital Versatile Disc, DVD), a floppy disc and a blue ray disc, where the magnetic disc generally reproduces data in a magnetic manner, and the optical disc optically reproduces data by using laser. The above combinations should also be included in the scope of the computer-readable medium.

An embodiment of this application provides a computer program product. The computer program product includes a computer program. The computer program causes a computer to perform the above method when run.

Embodiments of this application are described with reference to the flow diagrams and/or block diagrams of the method, the device (system), and the computer program product according to the embodiments of this application. It should be understood that each flow and/or block in the flow diagrams and/or block diagrams and combinations of the flows and/or blocks in the flow diagrams and/or block diagrams can be implemented by using computer program instructions. These computer program instructions may be provided for a general-purpose computer, a dedicated computer, an embedded processor, or a processing unit of any other programmable data processing devices to generate a machine, such that the instructions executed by a computer or a processing unit of any other programmable data processing devices generate an apparatus for implementing a specific function in one or more flows in the flow diagrams and/or in one or more blocks in the block diagrams.

The objectives, technical solutions and beneficial effects of this application are further described in detail in the above particular implementations. It should be understood that the above implementations are merely particular implementations of this application, but are not intended to limit the protection scope of this application.

## Claims

1. A method for image processing, comprising:
carrying out at least one round of warping processing on a color image of a first real frame according to motion vector information between the first real frame and a second real frame, to obtain a first target color image of a predicted frame, wherein the first target color image of the predicted frame comprises a blank region caused by the at least one round of warping processing, wherein
each of the at least one round of warping processing comprises: generating a full-screen grid layer covering the first real frame, wherein the full-screen grid layer comprises a plurality of grids, and each grid comprises a plurality of pixels; carrying out warping processing on at least some grids in the full-screen grid layer according to the motion vector information; outputting a color image corresponding to each round of warping processing according to a warped full-screen grid layer and the color image of the first real frame; and
filling the blank region in the first target color image of the predicted frame, to obtain a second target color image of the predicted frame, wherein the second target color image is a display image of the predicted frame,
wherein the at least one round of warping processing comprises a plurality of rounds of warping processing, and resolutions of full-screen grid layers corresponding to at least two of the plurality of rounds of warping processing are different.

2. The method according to claim 1, wherein the at least one round of warping processing comprises a plurality of rounds of warping processing, the plurality of rounds of warping processing correspond to a plurality of warping types respectively, and the plurality of warping types comprise at least one of:
a warping operation performed on a static object;
a warping operation performed on a dynamic object;
a warping operation performed on a static object in a long shot;
a warping operation performed on a dynamic object in a close shot;
a warping operation performed on a dynamic object in a long shot; and
a warping operation performed on a static object in a close shot.

3. The method according to any one of claims 1 to 2, wherein the method further comprises:
setting, in a case that an object to undergo an i^{th} round of processing of the at least one round of warping processing is the static object in the long shot, a resolution of a full-screen grid layer used in the i^{th} round of processing as a first resolution, wherein i is an integer greater than or equal to 1; and
setting, in a case that the object to undergo the i^{th} round of processing of the at least one round of warping processing is the static object or the dynamic object in the close shot, a resolution of the full-screen grid layer used in the i^{th} round of processing as a second resolution, wherein the first resolution is lower than the second resolution.

4. The method according to any one of claims 1 to 3, wherein the at least one round of warping processing comprises a plurality of rounds of warping processing, and a first round of the plurality of rounds of warping processing comprises:
generating a first full-screen grid layer covering the first real frame;
shifting grid vertices in the first full-screen grid layer according to motion vector information of a static object, to obtain a warped first full-screen grid layer; and
outputting pixels of the static object in the color image of the first real frame to a blank image according to the warped first full-screen grid layer, to obtain the first color image.

5. The method according to claim 4, wherein the outputting pixels of the static object in the color image of the first real frame to a blank image, to obtain the first color image comprise:
determining whether a first pixel belongs to the static object or the dynamic object according to a full-screen semantic image of the first real frame, wherein the first pixel is any pixel in the color image of the first real frame;
outputting, in a case that the first pixel belongs to the static object, the first pixel to a first position in the blank image, to obtain the first color image, wherein the first position is a corresponding position of the first pixel in the warped first full-screen grid layer; and
skipping outputting the first pixel to the blank image in a case that the first pixel belongs to the dynamic object.

6. The method according to claim 4 or 5, wherein a second round of the at least one round of warping processing comprises:
generating a second full-screen grid layer covering the first real frame;
shifting grid vertices in the second full-screen grid layer according to motion vector information of a dynamic object, to obtain a warped second full-screen grid layer; and
outputting pixels of the dynamic object in the color image of the first real frame to the first color image according to the warped second full-screen grid layer, to obtain the first target color image.

7. The method according to claim 6, wherein the outputting pixels of the dynamic object in the color image of the first real frame to the first color image according to the warped second full-screen grid layer, to obtain the first target color image comprises:
determining whether a second pixel belongs to the static object or the dynamic object according to the full-screen semantic image of the first real frame, where the second pixel is any pixel in the color image of the first real frame;
outputting, in a case that the second pixel belongs to the dynamic object, the second pixel to a second position in the first color image, to obtain the first target color image, where the second position is a corresponding position of the second pixel in the warped second full-screen grid layer; and
skipping outputting the second pixel to the first color image in a case that the second pixel belongs to the static object.

8. The method according to any one of claims 1 to 3, wherein the at least one round of warping processing comprises a plurality of rounds of warping processing, and a first round of the plurality of rounds of warping processing comprises:
generating a first full-screen grid layer covering the first real frame;
shifting grid vertices in the first full-screen grid layer according to motion vector information of a static object in a long shot, to obtain a warped first full-screen grid layer; and
outputting pixels of the static object in the long shot in the color image of the first real frame to a blank image according to the warped first full-screen grid layer, to obtain the first color image.

9. The method according to claim 8, wherein the outputting pixels of the static object in the long shot in the color image of the first real frame to a blank image according to the warped first full-screen grid layer, to obtain the first color image comprises:
determining whether a first pixel belongs to the static object or the dynamic object according to a full-screen semantic image of the first real frame, wherein the first pixel is any pixel in the color image of the first real frame;
determining whether a depth of the first pixel is greater than a preset depth threshold according to a scenario depth map of the first real frame in a case that the first pixel belongs to the static object;
outputting the first pixel to a first position in the blank image, to obtain the first color image in a case that the depth of the first pixel is greater than a preset depth threshold D, wherein the first position is a corresponding position of the first pixel in the warped first full-screen grid layer;
skipping outputting the first pixel to the blank image in a case that the depth of the first pixel is less than the preset depth threshold D; and
skipping outputting the first pixel to the blank image in a case that the first pixel belongs to the dynamic object.

10. The method according to claim 8 or 9, wherein a second round of the plurality of rounds of warping processing comprises:
generating a second full-screen grid layer covering the first real frame;
shifting grid vertices in the second full-screen grid layer according to motion vector information of the static object in the close shot, to obtain a warped second full-screen grid layer; and
outputting pixels of the static object in the close shot in the color image of the first real frame to the first color image according to the warped second full-screen grid layer, to obtain a second color image.

11. The method according to claim 10, wherein a third round of the plurality of rounds of warping processing comprises:
generating a third full-screen grid layer covering the first real frame;
shifting grid vertices in the third full-screen grid layer according to motion vector information of the dynamic object in the long shot, to obtain a warped third full-screen grid layer; and
outputting pixels of the dynamic object in the color image of the first real frame to a second color image according to the warped third full-screen grid layer, to obtain a third color image.

12. The method according to claim 11, wherein a fourth round of the plurality of rounds of warping processing comprises:
generating a fourth full-screen grid layer covering the first real frame;
shifting grid vertices in the fourth full-screen grid layer according to motion vector information of the dynamic object in the close shot, to obtain a warped fourth full-screen grid layer; and
outputting pixels of the dynamic object in the color image of the first real frame to the third color image according to the warped fourth full-screen grid layer, to obtain the first target color image.

13. The method according to any one of claims 1 to 12, wherein the filling the blank region in the first target color image of the predicted frame, to obtain a second target color image of the predicted frame comprise:
determining a threshold range to which a camera angle between the first real frame and the second real frame belongs;
selecting a target pixel filling algorithm from at least two candidate pixel filling algorithms according to the threshold range to which the camera angle belongs; and
filling the blank region in the first target color image according to the target pixel filling algorithm, to obtain the second target color image.

14. An apparatus for image processing, comprising:
a processor and a memory;
the memory storing computer-executable instructions; and
the processor being configured to execute the computer-executable instructions stored in the memory to cause the apparatus to perform the method according to any one of claims 1 to 13.

15. A computer-readable storage medium, wherein the computer-readable storage medium stores a computer program, and the computer program implements the method according to any one of claims 1 to 13 when executed by a processor.

## Patentansprüche

1. Verfahren zur Bildverarbeitung, umfassend:
Durchführen mindestens einer Runde einer Warping-Verarbeitung an einem Farbbild eines ersten realen Frames gemäß Bewegungsinformationsvektoren zwischen dem ersten realen Frame und einem zweiten realen Frame, um ein erstes Zielfarbbild eines vorhergesagten Frames zu erhalten, wobei das erste Zielfarbbild des vorhergesagten Frames einen durch die mindestens eine Runde der Warping-Verarbeitung verursachten leeren Bereich umfasst, wobei
jede der mindestens einen Runde der Warping-Verarbeitung umfasst: Erzeugen einer Vollbild-Gitterebene, die den ersten realen Frame abdeckt, wobei die Vollbild-Gitterebene eine Vielzahl von Gittern umfasst und jedes Gitter eine Vielzahl von Pixeln umfasst; Durchführen einer Warping-Verarbeitung an mindestens einigen Gittern in der Vollbild-Gitterebene gemäß den Bewegungsinformationsvektoren; Ausgeben eines Farbbildes, das jeder Runde der Warping-Verarbeitung entspricht, gemäß einer gewarpten Vollbild-Gitterebene und dem Farbbild des ersten realen Frames; und
Auffüllen des leeren Bereichs im ersten Zielfarbbild des vorhergesagten Frames, um ein zweites Zielfarbbild des vorhergesagten Frames zu erhalten, wobei das zweite Zielfarbbild ein Anzeigebild des vorhergesagten Frames ist,
wobei die mindestens eine Runde der Warping-Verarbeitung eine Vielzahl von Runden der Warping-Verarbeitung umfasst und die Auflösungen der Vollbild-Gitterebenen, die mindestens zwei der Vielzahl von Runden der Warping-Verarbeitung entsprechen, unterschiedlich sind.

2. Verfahren nach Anspruch 1, wobei die mindestens eine Runde der Warping-Verarbeitung eine Vielzahl von Runden der Warping-Verarbeitung umfasst, wobei die Vielzahl der Runden der Warping-Verarbeitung jeweils einer Vielzahl von Warping-Typen entsprechen und die Vielzahl der Warping-Typen mindestens einen der folgenden umfasst:
einen Warping-Vorgang, der an einem statischen Objekt durchgeführt wird;
einen Warping-Vorgang, der an einem dynamischen Objekt durchgeführt wird;
einen Warping-Vorgang, der an einem statischen Objekt in einer Fernaufnahme durchgeführt wird;
einen Warping-Vorgang, der an einem dynamischen Objekt in einer Nahaufnahme durchgeführt wird;
einen Warping-Vorgang, der an einem dynamischen Objekt in einer Fernaufnahme durchgeführt wird; und
einen Warping-Vorgang, der an einem statischen Objekt in einer Nahaufnahme durchgeführt wird.

3. Verfahren nach einem der Ansprüche 1 bis 2, wobei das Verfahren ferner umfasst:
Einstellen, für den Fall, dass ein Objekt, das eine i^{te} Runde der Verarbeitung der mindestens einen Runde der Warping-Verarbeitung durchlaufen soll, das statische Objekt in der Fernaufnahme ist, einer Auflösung einer Vollbild-Gitterebene, die in der i^{te} Runde der Verarbeitung verwendet wird, als eine erste Auflösung, wobei i eine ganze Zahl größer oder gleich 1 ist; und
Einstellung, wobei in einem Fall, in dem das Objekt, das der i^{ten} Runde der Verarbeitung der mindestens einen Runde der Warping-Verarbeitung unterzogen werden soll, das statische Objekt oder das dynamische Objekt in der Nahaufnahme ist, eine Auflösung der Vollbild-Rasterebene, die in der i^{ten} Runde der Verarbeitung verwendet wird, als zweite Auflösung festgelegt wird, wobei die erste Auflösung niedriger als die zweite Auflösung ist.

4. Verfahren nach einem der Ansprüche 1 bis 3, wobei die mindestens eine Runde der Warping-Verarbeitung eine Mehrzahl von Runden der Warping-Verarbeitung umfasst und eine erste Runde der Mehrzahl von Runden der Warping-Verarbeitung umfasst:
Erzeugen einer ersten Vollbild-Rasterebene, die den ersten realen Frame abdeckt;
Verschieben von Rastervertizes in der ersten Vollbild-Rasterebene gemäß Bewegungsvektorinformationen eines statischen Objekts, um eine gewarpte erste Vollbild-Rasterebene zu erhalten; und
Ausgeben von Pixeln des statischen Objekts im Farbbild des ersten realen Frames an ein leeres Bild gemäß der gewarpten ersten Vollbild-Rasterebene, um das erste Farbbild zu erhalten.

5. Verfahren nach Anspruch 4, wobei das Ausgeben von Pixeln des statischen Objekts im Farbbild des ersten realen Frames an ein leeres Bild, um das erste Farbbild zu erhalten, umfasst:
Bestimmen, ob ein erstes Pixel zum statischen Objekt oder zum dynamischen Objekt gehört, gemäß einem Vollbild-Semantikbild des ersten realen Frames, wobei das erste Pixel ein beliebiges Pixel im Farbbild des ersten realen Frames ist;
Ausgeben, in einem Fall, in dem das erste Pixel zum statischen Objekt gehört, des ersten Pixels an eine erste Position im leeren Bild, um das erste Farbbild zu erhalten, wobei die erste Position eine entsprechende Position des ersten Pixels in der gewarpten ersten Vollbild-Rasterebene ist; und
Überspringen der Ausgabe des ersten Pixels an das leere Bild in einem Fall, in dem das erste Pixel zum dynamischen Objekt gehört.

6. Verfahren nach Anspruch 4 oder 5, wobei eine zweite Runde der mindestens einen Runde der Warping-Verarbeitung umfasst:
Erzeugen einer zweiten Vollbild-Rasterebene, die den ersten realen Frame abdeckt;
Verschieben von Rastervertizes in der zweiten Vollbild-Rasterebene gemäß Bewegungsvektorinformationen eines dynamischen Objekts, um eine gewarpte zweite Vollbild-Rasterebene zu erhalten; und
Ausgeben von Pixeln des dynamischen Objekts im Farbbild des ersten realen Frames an das erste Farbbild gemäß der gewarpten zweiten Vollbild-Rasterebene, um das erste Ziel-Farbbild zu erhalten.

7. Das Verfahren nach Anspruch 6, wobei das Ausgeben der Pixel des dynamischen Objekts im Farbbild des ersten echten Einzelbildes an das erste Farbbild gemäß der verzerrten zweiten Vollbild-Rasterebene, um das erste Ziel-Farbbild zu erhalten, Folgendes umfasst:
Bestimmen, ob ein zweites Pixel zum statischen Objekt oder zum dynamischen Objekt gehört, basierend auf dem Vollbild-Semantikbild des ersten echten Einzelbildes, wobei das zweite Pixel ein beliebiges Pixel im Farbbild des ersten echten Einzelbildes ist;
Ausgeben des zweiten Pixels an eine zweite Position im ersten Farbbild für den Fall, dass das zweite Pixel zum dynamischen Objekt gehört, um das erste Ziel-Farbbild zu erhalten, wobei die zweite Position eine entsprechende Position des zweiten Pixels in der verzerrten zweiten Vollbild-Rasterebene ist; und
Überspringen der Ausgabe des zweiten Pixels an das erste Farbbild für den Fall, dass das zweite Pixel zum statischen Objekt gehört.

8. Das Verfahren nach einem der Ansprüche 1 bis 3, wobei die mindestens eine Runde der Verzerrungsverarbeitung eine Vielzahl von Runden der Verzerrungsverarbeitung umfasst und eine erste Runde der Vielzahl von Runden der Verzerrungsverarbeitung Folgendes umfasst:
Erzeugen einer ersten Vollbild-Rasterebene, die das erste echte Einzelbild abdeckt;
Verschieben von Raster-Eckpunkten in der ersten Vollbild-Rasterebene gemäß Bewegungsvektorinformationen eines statischen Objekts in einer Totalen, um eine verzerrte erste Vollbild-Rasterebene zu erhalten; und
Ausgeben von Pixeln des statischen Objekts in der Totalen im Farbbild des ersten echten Einzelbildes an ein leeres Bild gemäß der verzerrten ersten Vollbild-Rasterebene, um das erste Farbbild zu erhalten.

9. Das Verfahren nach Anspruch 8, wobei das Ausgeben von Pixeln des statischen Objekts in der Totalen im Farbbild des ersten echten Einzelbildes an ein leeres Bild gemäß der verzerrten ersten Vollbild-Rasterebene, um das erste Farbbild zu erhalten, Folgendes umfasst:
Bestimmen, ob ein erstes Pixel zum statischen Objekt oder zum dynamischen Objekt gehört, basierend auf einem Vollbild-Semantikbild des ersten echten Einzelbildes, wobei das erste Pixel ein beliebiges Pixel im Farbbild des ersten echten Einzelbildes ist;
Bestimmen, ob eine Tiefe des ersten Pixels größer als ein voreingestellter Tiefenschwellenwert ist, basierend auf einer Szenen-Tiefenkarte des ersten echten Einzelbildes für den Fall, dass das erste Pixel zum statischen Objekt gehört;
Ausgeben des ersten Pixels an eine erste Position im leeren Bild, um das erste Farbbild zu erhalten, für den Fall, dass die Tiefe des ersten Pixels größer als ein voreingestellter Tiefenschwellenwert D ist, wobei die erste Position eine entsprechende Position des ersten Pixels in der verzerrten ersten Vollbild-Rasterebene ist;
Überspringen der Ausgabe des ersten Pixels an das leere Bild, falls die Tiefe des ersten Pixels kleiner als der voreingestellte Tiefenschwellenwert D ist; und
Überspringen der Ausgabe des ersten Pixels an das leere Bild, falls das erste Pixel zum dynamischen Objekt gehört.

10. Verfahren nach Anspruch 8 oder 9, wobei eine zweite Runde der mehreren Runden der Warping-Verarbeitung umfasst:
Erzeugen einer zweiten Vollbild-Gitterebene, die den ersten realen Frame abdeckt;
Verschieben von Gittereckpunkten in der zweiten Vollbild-Gitterebene gemäß Bewegungsvektorinformationen des statischen Objekts in der Nahaufnahme, um eine gewarpte zweite Vollbild-Gitterebene zu erhalten; und
Ausgeben von Pixeln des statischen Objekts in der Nahaufnahme im Farbbild des ersten realen Frames an das erste Farbbild gemäß der gewarpten zweiten Vollbild-Gitterebene, um ein zweites Farbbild zu erhalten.

11. Verfahren nach Anspruch 10, wobei eine dritte Runde der mehreren Runden der Warping-Verarbeitung umfasst:
Erzeugen einer dritten Vollbild-Gitterebene, die den ersten realen Frame abdeckt;
Verschieben von Gittereckpunkten in der dritten Vollbild-Gitterebene gemäß Bewegungsvektorinformationen des dynamischen Objekts in der Fernaufnahme, um eine gewarpte dritte Vollbild-Gitterebene zu erhalten; und
Ausgeben von Pixeln des dynamischen Objekts im Farbbild des ersten realen Frames an ein zweites Farbbild gemäß der gewarpten dritten Vollbild-Gitterebene, um ein drittes Farbbild zu erhalten.

12. Verfahren nach Anspruch 11, wobei eine vierte Runde der mehreren Runden der Warping-Verarbeitung umfasst:
Erzeugen einer vierten Vollbild-Gitterebene, die den ersten realen Frame abdeckt;
Verschieben von Gittereckpunkten in der vierten Vollbild-Gitterebene gemäß Bewegungsvektorinformationen des dynamischen Objekts in der Nahaufnahme, um eine gewarpte vierte Vollbild-Gitterebene zu erhalten; und
Ausgeben von Pixeln des dynamischen Objekts im Farbbild des ersten realen Frames an das dritte Farbbild gemäß der gewarpten vierten Vollbild-Gitterebene, um das erste Ziel-Farbbild zu erhalten.

13. Verfahren nach einem der Ansprüche 1 bis 12, wobei das Füllen des leeren Bereichs im ersten Ziel-Farbbild des vorhergesagten Frames, um ein zweites Ziel-Farbbild des vorhergesagten Frames zu erhalten, umfasst:
Bestimmen eines Schwellenwertbereichs, zu dem ein Kamerawinkel zwischen dem ersten realen Frame und dem zweiten realen Frame gehört;
Auswählen eines Ziel-Pixelfüllalgorithmus aus mindestens zwei Kandidaten-Pixelfüllalgorithmen gemäß dem Schwellenwertbereich, zu dem der Kamerawinkel gehört; und
Auffüllen des leeren Bereichs im ersten Ziel-Farbbild gemäß dem Zielpixel-Füllalgorithmus, um das zweite Ziel-Farbbild zu erhalten.

14. Vorrichtung zur Bildverarbeitung, umfassend:
einen Prozessor und einen Speicher;
wobei der Speicher computerausführbare Anweisungen speichert; und
wobei der Prozessor konfiguriert ist, die im Speicher gespeicherten computerausführbaren Anweisungen auszuführen, um die Vorrichtung zu veranlassen, das Verfahren nach einem der Ansprüche 1 bis 13 durchzuführen.

15. Computerlesbares Speichermedium, wobei das computerlesbare Speichermedium ein Computerprogramm speichert und das Computerprogramm das Verfahren nach einem der Ansprüche 1 bis 13 implementiert, wenn es von einem Prozessor ausgeführt wird.

## Revendications

1. Procédé de traitement d'image, comprenant :
l'exécution d'au moins une passe de traitement de déformation sur une image couleur d'une première trame réelle en fonction d'informations de vecteur de mouvement entre la première trame réelle et une seconde trame réelle, pour obtenir une première image couleur cible d'une trame prédite, dans lequel la première image couleur cible de la trame prédite comprend une zone vide causée par ladite au moins une passe de traitement de déformation, dans lequel
chacune de ladite au moins une passe de traitement de déformation comprend : la génération d'une couche de grille plein écran couvrant la première trame réelle, dans lequel la couche de grille plein écran comprend une pluralité de grilles, et chaque grille comprend une pluralité de pixels ; l'exécution d'un traitement de déformation sur au moins certaines grilles de la couche de grille plein écran en fonction des informations de vecteur de mouvement ; la délivrance d'une image couleur correspondant à chaque passe de traitement de déformation en fonction d'une couche de grille plein écran déformée et de l'image couleur de la première trame réelle ; et
le remplissage de la zone vide dans la première image couleur cible de la trame prédite, pour obtenir une seconde image couleur cible de la trame prédite, dans lequel la seconde image couleur cible est une image d'affichage de la trame prédite,
dans lequel ladite au moins une passe de traitement de déformation comprend une pluralité de passes de traitement de déformation, et les résolutions des couches de grille plein écran correspondant à au moins deux de la pluralité de passes de traitement de déformation sont différentes.

2. Procédé selon la revendication 1, dans lequel ladite au moins une passe de traitement de déformation comprend une pluralité de passes de traitement de déformation, la pluralité de passes de traitement de déformation correspond respectivement à une pluralité de types de déformation, et la pluralité de types de déformation comprend au moins l'un parmi :
une opération de déformation effectuée sur un objet statique ;
une opération de déformation effectuée sur un objet dynamique ;
une opération de déformation effectuée sur un objet statique dans un plan large ;
une opération de déformation effectuée sur un objet dynamique dans un plan rapproché ;
une opération de déformation effectuée sur un objet dynamique dans un plan large ; et
une opération de déformation effectuée sur un objet statique dans un plan rapproché.

3. Procédé selon l'une quelconque des revendications 1 à 2, dans lequel le procédé comprend en outre :
le réglage, dans le cas où un objet devant subir une i^{ème} passe de traitement de ladite au moins une passe de traitement de déformation est l'objet statique dans le plan large, d'une résolution d'une couche de grille plein écran utilisée lors de la i^{ème} passe de traitement en tant que première résolution, où i est un entier supérieur ou égal à 1 ; et
réglage, dans le cas où l'objet devant subir la i^{ème} série de traitement parmi l'au moins une série de traitement de déformation est l'objet statique ou l'objet dynamique dans le plan rapproché, une résolution de la couche de grille plein écran utilisée lors de la i^{ème} série de traitement en tant que seconde résolution, dans laquelle la première résolution est inférieure à la seconde résolution.

4. Procédé selon l'une quelconque des revendications 1 à 3, dans lequel l'au moins une série de traitement de déformation comprend une pluralité de séries de traitement de déformation, et une première série de la pluralité de séries de traitement de déformation comprend :
la génération d'une première couche de grille plein écran couvrant la première trame réelle ;
le décalage des sommets de grille dans la première couche de grille plein écran selon des informations de vecteur de mouvement d'un objet statique, pour obtenir une première couche de grille plein écran déformée ; et
l'extraction des pixels de l'objet statique dans l'image couleur de la première trame réelle vers une image vierge selon la première couche de grille plein écran déformée, pour obtenir la première image couleur.

5. Procédé selon la revendication 4, dans lequel l'extraction des pixels de l'objet statique dans l'image couleur de la première trame réelle vers une image vierge, pour obtenir la première image couleur comprend :
la détermination si un premier pixel appartient à l'objet statique ou à l'objet dynamique selon une image sémantique plein écran de la première trame réelle, dans laquelle le premier pixel est n'importe quel pixel dans l'image couleur de la première trame réelle ;
l'extraction, dans le cas où le premier pixel appartient à l'objet statique, du premier pixel vers une première position dans l'image vierge, pour obtenir la première image couleur, dans laquelle la première position est une position correspondante du premier pixel dans la première couche de grille plein écran déformée ; et
l'omission de l'extraction du premier pixel vers l'image vierge dans le cas où le premier pixel appartient à l'objet dynamique.

6. Procédé selon la revendication 4 ou 5, dans lequel une seconde série de l'au moins une série de traitement de déformation comprend :
la génération d'une seconde couche de grille plein écran couvrant la première trame réelle ;
le décalage des sommets de grille dans la seconde couche de grille plein écran selon des informations de vecteur de mouvement d'un objet dynamique, pour obtenir une seconde couche de grille plein écran déformée ; et
l'extraction des pixels de l'objet dynamique dans l'image couleur de la première trame réelle vers la première image couleur selon la seconde couche de grille plein écran déformée, pour obtenir la première image couleur cible.

7. Procédé selon la revendication 6, dans lequel la sortie des pixels de l'objet dynamique dans l'image couleur de la première trame réelle vers la première image couleur selon la deuxième couche de grille plein écran déformée, pour obtenir la première image couleur cible comprend :
déterminer si un deuxième pixel appartient à l'objet statique ou à l'objet dynamique selon l'image sémantique plein écran de la première trame réelle, où le deuxième pixel est n'importe quel pixel dans l'image couleur de la première trame réelle ;
sortir, dans le cas où le deuxième pixel appartient à l'objet dynamique, le deuxième pixel vers une deuxième position dans la première image couleur, pour obtenir la première image couleur cible, où la deuxième position est une position correspondante du deuxième pixel dans la deuxième couche de grille plein écran déformée ; et
omettre de sortir le deuxième pixel vers la première image couleur dans le cas où le deuxième pixel appartient à l'objet statique.

8. Procédé selon l'une quelconque des revendications 1 à 3, dans lequel le au moins un cycle de traitement de déformation comprend une pluralité de cycles de traitement de déformation, et un premier cycle de la pluralité de cycles de traitement de déformation comprend :
générer une première couche de grille plein écran couvrant la première trame réelle ;
décaler les sommets de grille dans la première couche de grille plein écran selon des informations de vecteur de mouvement d'un objet statique dans un plan large, pour obtenir une première couche de grille plein écran déformée ; et
sortir les pixels de l'objet statique dans le plan large dans l'image couleur de la première trame réelle vers une image vierge selon la première couche de grille plein écran déformée, pour obtenir la première image couleur.

9. Procédé selon la revendication 8, dans lequel la sortie des pixels de l'objet statique dans le plan large dans l'image couleur de la première trame réelle vers une image vierge selon la première couche de grille plein écran déformée, pour obtenir la première image couleur comprend :
déterminer si un premier pixel appartient à l'objet statique ou à l'objet dynamique selon une image sémantique plein écran de la première trame réelle, dans lequel le premier pixel est n'importe quel pixel dans l'image couleur de la première trame réelle ;
déterminer si une profondeur du premier pixel est supérieure à un seuil de profondeur prédéfini selon une carte de profondeur de scénario de la première trame réelle dans le cas où le premier pixel appartient à l'objet statique ;
sortir le premier pixel vers une première position dans l'image vierge, pour obtenir la première image couleur dans le cas où la profondeur du premier pixel est supérieure à un seuil de profondeur prédéfini D, dans lequel la première position est une position correspondante du premier pixel dans la première couche de grille plein écran déformée ;
sauter l'affichage du premier pixel vers l'image vierge dans le cas où la profondeur du premier pixel est inférieure au seuil de profondeur prédéfini D ; et
sauter l'affichage du premier pixel vers l'image vierge dans le cas où le premier pixel appartient à l'objet dynamique.

10. Le procédé selon la revendication 8 ou 9, dans lequel un deuxième cycle de la pluralité de cycles de traitement de déformation comprend :
générer une deuxième couche de grille plein écran couvrant la première trame réelle ;
décaler les sommets de la grille dans la deuxième couche de grille plein écran selon des informations de vecteur de mouvement de l'objet statique dans le plan rapproché, pour obtenir une deuxième couche de grille plein écran déformée ; et
afficher les pixels de l'objet statique dans le plan rapproché dans l'image couleur de la première trame réelle vers la première image couleur selon la deuxième couche de grille plein écran déformée, pour obtenir une deuxième image couleur.

11. Le procédé selon la revendication 10, dans lequel un troisième cycle de la pluralité de cycles de traitement de déformation comprend :
générer une troisième couche de grille plein écran couvrant la première trame réelle ;
décaler les sommets de la grille dans la troisième couche de grille plein écran selon des informations de vecteur de mouvement de l'objet dynamique dans le plan large, pour obtenir une troisième couche de grille plein écran déformée ; et
afficher les pixels de l'objet dynamique dans l'image couleur de la première trame réelle vers une deuxième image couleur selon la troisième couche de grille plein écran déformée, pour obtenir une troisième image couleur.

12. Le procédé selon la revendication 11, dans lequel un quatrième cycle de la pluralité de cycles de traitement de déformation comprend :
générer une quatrième couche de grille plein écran couvrant la première trame réelle ;
décaler les sommets de la grille dans la quatrième couche de grille plein écran selon des informations de vecteur de mouvement de l'objet dynamique dans le plan rapproché, pour obtenir une quatrième couche de grille plein écran déformée ; et
afficher les pixels de l'objet dynamique dans l'image couleur de la première trame réelle vers la troisième image couleur selon la quatrième couche de grille plein écran déformée, pour obtenir la première image couleur cible.

13. Le procédé selon l'une quelconque des revendications 1 à 12, dans lequel le remplissage de la région vierge dans la première image couleur cible de la trame prédite, pour obtenir une deuxième image couleur cible de la trame prédite comprend :
déterminer une plage de seuil à laquelle appartient un angle de caméra entre la première trame réelle et la deuxième trame réelle ;
sélectionner un algorithme de remplissage de pixels cible parmi au moins deux algorithmes de remplissage de pixels candidats selon la plage de seuil à laquelle l'angle de caméra appartient ; et
remplir la zone vide dans la première image couleur cible selon l'algorithme de remplissage de pixels cible, pour obtenir la seconde image couleur cible.

14. Appareil de traitement d'image, comprenant :
un processeur et une mémoire ;
la mémoire stockant des instructions exécutables par ordinateur ; et
le processeur étant configuré pour exécuter les instructions exécutables par ordinateur stockées dans la mémoire pour amener l'appareil à mettre en œuvre le procédé selon l'une quelconque des revendications 1 à 13.

15. Support de stockage lisible par ordinateur, dans lequel le support de stockage lisible par ordinateur stocke un programme informatique, et le programme informatique met en œuvre le procédé selon l'une quelconque des revendications 1 à 13 lorsqu'il est exécuté par un processeur.
